(19) Europäisches Patentamt
European Patent Office
Office européen des brevets

(11) EP 1 259 556 B1

(12) EUROPEAN PATENT SPECIFICATION

(45) Date of publication and mention of the grant of the patent:
**07.06.2006 Bulletin 2006/23**

(21) Application number: **00942790.7**

(22) Date of filing: **14.06.2000**

(51) Int Cl.:
*C08F 230/08* (2006.01) *C08F 8/12* (2006.01)
*C08F 297/06* (2006.01) *C08G 81/02* (2006.01)

(86) International application number:
**PCT/US2000/016277**

(87) International publication number:
**WO 2001/009207 (08.02.2001 Gazette 2001/06)**

(54) **IMPROVED DERIVATIVES OF SILANE FUNCTIONALIZED OLEFIN INTERPOLYMERS**
VERBESSERTE SILANEFUNKTIONELLE OLEFIN-INTERPOLYMERE DERIVATE
DERIVES D'INTERPOLYMERES D'OLEFINES A FONCTIONNALITE SILANE

(84) Designated Contracting States:
**AT BE CH CY DE DK ES FI FR GB GR IE IT LI LU MC NL PT SE**

(30) Priority: **29.07.1999 US 146291 P**

(43) Date of publication of application:
**27.11.2002 Bulletin 2002/48**

(73) Proprietor: **DOW GLOBAL TECHNOLOGIES INC.**
**Midland, Michigan 48674 (US)**

(72) Inventors:
- **ARRIOLA, Daniel, J.**
  **Midland, MI 48642 (US)**
- **BISHOP, Matthew, T.**
  **Midland, MI 48642 (US)**
- **CAMPBELL, Richard, E., Jr.**
  **Midland, MI 48642-3111 (US)**
- **DEVORE, David, D.**
  **Midland, MI 48642 (US)**
- **HAHN, Stephen, F.**
  **Midland, MI 48642 (US)**
- **HO, Thoi, H.**
  **Lake Jackson, TX 77566 (US)**
- **MCKEAND, Thomas, J., Jr.**
  **Freeport, TX 77541 (US)**
- **TIMMERS, Francis, J.**
  **Midland, MI 48642 (US)**

(74) Representative: **Burford, Anthony Frederick et al**
**Beck Greener**
**Fulwood House**
**12 Fulwood Place**
**London WC1V 6HR (GB)**

(56) References cited:
**EP-A- 0 321 259**
**EP-A- 0 438 710**
**WO-A-99/41289**
**US-A- 3 644 306**
**US-A- 5 367 090**
**US-A- 5 397 648**
**US-A- 5 550 194**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to derivatives of olefin interpolymers having uniform incorporation of silane functionality therein, which derivatives are formed by post polymerization reaction of such silane functionality. The derivatives thereof may be usefully employed in the preparation of solid objects and articles such as moldings, films, sheets and foamed objects by molding, extruding or the like process.

In EP-A-0321259, silicon containing polymers, prepared by polymerizing a vinyl silane compound or copolymerizing the same with an olefin monomer using as a catalyst a titanium compound supported on a magnesium halide carrier and an organic aluminum halide compound, were disclosed. In WO 97/42234, there is disclosed a process for the preparation of polymers of vinylidene aromatic monomers having a stereoregular structure of high syndiotacticity, by the use of Group 4 metal coordination catalysts and a hydrocarbylsilane or dihydrocarbylsilane adjuvant. In Journal of the American Chemical Society (JACS), (1995), 117, 10747-19748 and in EP-A-0739,910, the use of silanes as chain transfer agents in metallocene-mediated olefin polymerizations was described. The products formed included silyl terminated polyolefins. Additional disclosures of interest include: US-A-5,741,858; EP-A-702 032; EP-A-325 573; WO 97/24023; WO 98/56835; WO95/29197; and JACS (1998), 120,4019-4020.

US-A-3644306 discloses essentially linear terpolymers of 65 to 80 mol% ethylene, 20 to 35 mol% propylene and 0.02 to 5.0 mol% alkenylsilane of formula:-

$$R_nH_mSi(CH_2)_pCH{=}CH_2,$$

wherein R is an alkyl, cycloalkyl or aryl group, m = 1, 2 or 3, n = 0, 1 or 2; m+n = 3 and p = 0, 1, 2, 3 or 4. They are prepared by polymerizing the monomers in the presence of a catalyst system obtained from a titanium or vanadium compound, preferably titanium trichloride, and an aluminum organometallic compound, preferably an alkyl aluminum. The terpolymer may be cross-linked to provide Si-O-Si crosslinks between silicon atoms in different macromolecular chains by, for example, treatment with a mixture of butanol and aqueous ammonia, or by treatment with alkaline alcoholic solutions.

EP-A-1054910/WO 99/41289 (filed 21st January 1999; published 19th August 1999) discloses preparing homopolymers and copolymers of addition polymerizable monomers, or mixtures thereof, by contacting said monomer or mixture under high monomer conversion polymerization conditions with a catalyst composition comprising:

a catalyst system comprising a Group 3-10 metal complex; and
a silane, or hydrocarbylsilane corresponding to the formula:

$$J_jSiH_{4-j} \text{ or } A_nJ_jSiH_{4-(n+j)}$$

wherein:

J is $C_{1-40}$ hydrocarbyl,
A is a $C_{2-20}$ alkenyl group,
n is 1 or 2, and
j is 0, 1 or 2;

wherein the polymer comprises from 0.1 to 100 long chain branches per 10,000 carbons, at least some of which comprise a silane branching center.

The metal complex can be a Group 4 metal complex containing from 1 to 3 $\pi$-bonded anionic or neutral ligand groups

According to the present invention there is now provided:

a process for preparing a derivative of a silane functionalized interpolymer comprising

(i) preparing an interpolymer by contacting under addition polymerization conditions one or more addition polymerizable monomers lacking silane functionality and one or more alkenylsilane compounds corresponding to the formula:

$$A_nJ_jSiH_{4-(n+j)}$$

wherein:

J is $C_{1-40}$ hydrocarbyl,
A is a $C_{2-20}$ alkenyl group,
n is 1 or 2, preferably 1, and
j is 0, 1 or 2;

with a catalyst composition comprising a transition metal complex corresponding to the formula:

$$K'_kMZ'_mL_lX_p,$$

or a dimer thereof
wherein:

K' is an anionic group containing delocalized $\pi$-electrons through which K' is bound to M, said K' group containing up to 50 atoms not counting hydrogen atoms, optionally two K' groups are joined together forming a bridged structure, and further optionally one K' is bound to Z';
M is a metal of Group 4 of the Periodic Table of the Elements in the +2, +3 or +4 formal oxidation state;
Z' is an optional, divalent substituent of up to 50 non-hydrogen atoms that together with K' forms a metallocycle with M;
L is an optional neutral ligand having up to 20 non-hydrogen atoms;
X each occurrence is a monovalent, anionic moiety having up to 40 non-hydrogen atoms, optionally, two X groups may be covalently bound together forming a divalent dianionic moiety having both valences bound to M, or, optionally two X groups may be covalently bound together to form a neutral, conjugated or non-conjugated diene that is bound to M by means of delocalized $\pi$-electrons (whereupon M is in the +2 oxidation state), or further optionally one or more X and one or more L groups may be bonded together thereby forming a moiety that is both covalently bound to M and coordinated thereto by means of Lewis base functionality;
k is 1 or 2; m is 0 or 1; l is a number from 0 to 3; p is an integer from 0 to 3; and
the sum, k+m+p, is equal to the formal oxidation state of M, except when two X groups together form a neutral conjugated or non-conjugated diene that is bound to M via delocalized $\pi$-electrons, in which case the sum k+m is equal to the formal oxidation state of M,

said interpolymer comprising from 0.01 to 100 long chain branches per 10,000 carbons having randomly distributed silane functionality and containing from 0.01 to 1000 silane groups derived from the alkenylsilane compound per 10,000 carbons and
(ii) subsequently subjecting the interpolymer to a silane conversion process selected from:

a) coupling of one or more chains of such interpolymers,
b) hydrolysis to give Si-$OR^4$ groups, where $R^4$ is H or $C_{1-10}$ hydrocarbyl;
c) hydrolysis and neutralization to give ionomers having Si-$OR^6$ groups, where $R^6$ is a metal cation; or
d) condensation or other reaction with an inorganic substrate having surface hydroxyl groups or with a polyfunctional linker compound containing two or more alcohol, amine, epoxy, peroxide, carboxyl, isocyanate, nitrile, amide, ketone, ester, or diazonium groups or metal salt derivatives of carboxy groups.

Preferably, the interpolymer comprises uniformly and randomly distributed silane functionality within the interpolymer. Preferably, the interpolymer contains from 0.05 to 50 silane groups derived from the alkenylsilane compound per 10,000 carbons. In one embodiment, the alkenylsilane compounds correspond to the formula: $AJ_2SiH$
wherein:

J is $C_{1-40}$ hydrocarbyl, and

A is a $C_{2-20}$ alkenyl group

All reference to the Periodic Table of the Elements herein shall refer to the Periodic Table of the Elements, published and copyrighted by CRC Press, Inc., 1995. Also, any reference to a Group or Series shall be to the Group or Series as reflected in this Periodic Table of the Elements, utilizing the IUPAC system for numbering groups. By the term "interpolymer" herein is meant any form of polymer, including graft or block polymers, that includes in polymerized form two or more monomers. By the term "random distribution" as used herein, is meant that the silane functionality resulting from polymerization of the alkenylsilane group is distributed within each polymer chain in a random or nearly random,

for example, non-block, manner (intrachain distribution). By the term "uniform distribution" is meant that the forgoing silane functionality is equally or nearly equally distributed among different polymer chains (interchain distribution). When subsequent derivatives of the silane groups of such random or of such uniform, random interpolymers are performed, for example coupling, the resulting converted polymer's physical properties are improved and are more homogeneous because none of the polymer populations are systematically included or excluded from the reaction. Advantageously therefor, highly efficient post reactor functionalization of the present interpolymers may be obtained.

Quantification of silane content in the interpolymers utilized in the invention may be achieved by the use of any suitable analytical technique, including $^{13}C$ NMR-, $^{29}Si$ NMR- and IR- spectroscopic analysis of the interpolymer. Such techniques may also be employed to monitor and measure the degree of conversion of silane functionality in subsequent derivative formation.

Interchain distribution of silane within the interpolymers may be measured by a polymer fractionation technique, followed by silane analysis of the various polymer fractions, using one of the foregoing techniques. Examples of suitable fractionation techniques include Temperature Rising Elution Fractionation (TREF), Analytical Temperature Rising Elution Fractionation (ATREF) or high pressure liquid chromatography (HPLC).

TREF analysis is a well known method of fractionation that has been published in the open literature over the past 15 years. ATREF is a similar technique for fractional analysis of olefin polymers capable of fractionating semi-crystalline polymers as a function of crystallization temperature while simultaneously estimating the molecular weight of the fractions. It has been described in US-A-4,798,081, as well as in "Determination of Short-Chain Branching Distributions of Ethylene copolymers by Automated Analytical Temperature Rising Elution Fractionation" (Auto-ATREF), J. of Appl Pol Sci: Applied Polymer Symposium 45, 25-37 (1990). The primary difference between ATREF and TREF is that the ATREF technique is done on a small scale and fractions are not actually isolated. Instead, a typical liquid chromatographic (LC) mass detector, such as an infrared single frequency detector, is used to quantify the crystallinity distribution of a polymer as a function of elution temperature. This distribution can then be transformed to any number of alternative domains such as comonomer distribution. This transformed distribution can then be interpreted according to a structural variable like comonomer content.

To obtain ATREF data, a commercially available viscometer especially adapted for LC analysis, such as a Viskotek™ is coupled with the IR mass detector. Together these two LC detectors can be used to calculate the intrinsic viscosity of the ATREF eluant. The viscosity average molecular weight of a given fraction can then be estimated using appropriate Mark Houwink constants, the corresponding intrinsic viscosity, and suitable coefficients to estimate the fractions concentration (dl/g) as it passes through the detectors. Thus, a typical ATREF report will provide the weight fraction polymer and viscosity average molecular weight as a function of elution temperature.

The molecular weight partitioning factor, $M_{pf}$, characterizes the ratio of the average molecular weight of the fractions with high comonomer content to the average molecular weight of the fractions with low comonomer content. Higher and lower comonomer content are defined as being below or above the median elution temperature of the TREF concentration plot respectively. That is, the TREF data is divided into two parts of equal weight. $M_{pf}$ is calculated from the following equation:

$$M_{pf} = \frac{\dfrac{\sum_{i=1}^{n} w_i \cdot M_i}{\sum_{i=1}^{n} w_i}}{\dfrac{\sum_{j=1}^{m} w_j \cdot M_j}{\sum_{j=1}^{m} w_j}},$$

where: $M_i$ is the viscosity average molecular weight and $w_i$ is the normalized weight fraction as determined by ATREF for the n data points in the fractions below the median elution temperature. $M_j$ is the viscosity average molecular weight and $w_j$ is the normalized weight fraction as determined by ATREF for the m data points in the fractions above the median elution temperature. Only those weight fractions, $w_i$ or $w_j$, which have associated viscosity average molecular weights greater than zero are used to calculate $M_{pf}$. For a valid calculation, it is required that n and m are greater than or equal to 3.

Randomness, or the distribution of silane functionality within a chain, can be calculated based on the various reactivity ratios for the catalyst with respect to the various comonomers. For a terpolymerization, as a most useful example, the reactivity ratios, r, for each monomer may be calculated based on two indices, i and j, where $k_{ij}$ is the rate constant for the most recently incorporated monomer i, with incoming monomer i or j during catalysis, with the reactivity ratio defined according to the formula: $r_{ij}=k_{ii}/k_{ij}$. Thus, for three monomers, identified as 1, 2, and 3, respectively,

$r_{12}=k_{11}/k_{12}$, $r_{21}=k_{22}/k_{21}$, $r_{13}=k_{11}/k_{13}$, and $r_{31}=k_{33}/k_{31}$. A random distribution of monomers throughout the copolymer chain is achieved, when $r_{12}*r_{21} = 1$ or nearly one and $r_{13}*r_{31} = 1$ or nearly one. For such terpolymers wherein two of the comonomers have similar reactivity ratios (for example, hexenyldimethylsilane and octene), the further simplification $r_{12} \cong r_{13}$ and $r_{21} \cong r_{31}$ may be made as well.

Preferred interpolymers utilized in the invention are those wherein the silane randomness meets the requirement of: $0.1 < r_{12}*r_{21} < 10.0$, more preferably $0.5 < r_{12}*r_{21}, < 2$, most preferably $0.75< r_{12}*r_{21} < 1.5$. Highly preferably, all comonomers are uniformly and randomly distributed within the polymer chains, or are nearly uniformly and randomly so distributed.

For a highly uniform polymer, the intrachain distribution or randomness can also be determined using $^{13}C$ NMR spectroscopy, according to known techniques.

As used herein the term "long chain branching" refers to pendant oligomeric, hydrocarbyl-, hydrocarbylsilyl- or silylhydrocarbyl- groups attached to a polymeric chain, which groups have a length greater than the length of a short chain group resulting from addition of a lone, intentionally added, polymerizable comonomer into the polymer chain. Examples of such intentionally added comonomers include propene, 1-butene, 1-hexene, 1-octene, branched olefins, and alkenylsilanes. Long chain branching in the present context includes polymer branches resulting from the reincorporation of addition polymerizable compounds generated as a result of β-hydride elimination, or other vinyl group generating process, with or without the involvement of the silane. Such long chain branches furthermore preferably reflect the monomer diversity present in the polymerization reactor, since in effect, they are portions of preformed polymer which are reincorporated into a growing polymer chain. In addition, long chain, silane functional branches can arise through chain transfer to the alkenylsilane compound, thereby generating a second, usually terminal, vinyl group in such compound, which vinyl group subsequently enters into the polymerization; reaction of the silane functionality of the alkenylsilane compound rather than the alkenyl functionality with the growing polymer chain, followed by addition polymerization of the alkenyl group; or chain transfer to a previously formed silane functional interpolymer.

Several techniques for measuring the extent of long chain branching in a copolymer already exist. Principle analytical techniques include those based on $^{13}C$ NMR analysis, optionally coupled with low angle laser light scattering or similar particle size measuring technique. Additionally, it is possible to arrive at an estimate of short chain branches, that is, branches due to the $C_{3-8}$ comonomer remnant, by preparation of a control copolymer using a labeled monomer, such as $^{13}C$ enriched 1-octene or ethylene, under the assumption that a similar level of branch distribution will exist in copolymers made under comparative conditions utilizing unmodified monomers. The level of long chain branching is thereafter determined by subtraction. The level of long chain branching may additionally be quantified from a knowledge of the silane branching centers present in the resulting copolymer, determined, for example, by $^{13}C$ or $^{29}Si$ NMR analysis, in addition to any conventional long chain branching that may arise due to the foregoing continuous high conversion process technique. Preferred polymers utilized in the present invention contain from 0.3 to 10 long chain branches per 10,000 carbons.

The incidence of long chain branching can be increased by careful control of processing conditions. For example, the use of a continuous, solution polymerization process (in which reactants and catalyst are continuously added to a polymerization reactor and product is continuously removed therefrom) operating at high conversion conditions favors long chain branch incorporation due to a relative increased molar concentration of *in situ* generated long chain, vinyl terminated monomer. Additionally, process conditions resulting in high local concentrations of β-hydride elimination products, for example gas phase polymerization processes, also favor long chain branch formation.

Preferred alkenylsilane compounds used herein include hexenylsilane, allylsilane, vinylsilane, octenylsilane, hexenyldimethylsilane, octenyldimethylsilane, vinyldimethylsilane, vinyldiethylsilane, vinyldi(n-butyl)silane, vinylmethyloctadecylsilane, vinyldiphenylsilane, vinyldibenzylsilane, allyldimethylsilane, allyldiethylsilane, allyldi(n-butyl)silane, allylmethyloctadecylsilane, allyldiphenylsilane, bishexenylsilane, and allyldibenzylsilane. Mixtures of the foregoing alkenylsilanes may also be used.

Preferred addition polymerizable monomers are olefins or mixtures of olefins and diolefins. Most preferred olefins are the $C_{2-20}$ α-olefins and mixtures thereof, most preferably, ethylene, propylene, and mixtures of ethylene with propylene, 1-butene, 1-hexene or 1-octene. The most preferred quantity of silane functionality in the interpolymers is from 0.05 to 50 such groups per 10,000 carbons.

The π-bonded anionic ligand groups may be cyclic or non-cyclic delocalized π-bonded anionic ligand groups. Exemplary of such π-bonded anionic ligand groups are conjugated or nonconjugated, cyclic or non-cyclic dienyl groups, allyl groups, boratabenzene groups, phosphoryl groups and arene groups. By the term "π-bonded" is meant that the ligand group is bonded to the transition metal by a sharing of electrons from a partially delocalized π-bond.

Each atom in the delocalized π-bonded group may independently be substituted with a radical selected from the group consisting of hydrogen, halogen, hydrocarbyl, halohydrocarbyl, hydrocarbyl-substituted metalloid radicals wherein the metalloid is selected from Group 14 of the Periodic Table of the Elements, and such hydrocarbyl- or hydrocarbyl-substituted metalloid radicals further substituted with a Group 15 or 16 hetero atom containing moiety. Included within the term "hydrocarbyl" are $C_{1-20}$ straight, branched and cyclic alkyl radicals, $C_{6-20}$ aromatic radicals, $C_{7-20}$ alkyl-

substituted aromatic radicals, and $C_{7-20}$ aryl-substituted alkyl radicals. In addition two or more such radicals may together form a fused ring system, including partially or fully hydrogenated fused ring systems, or they may form a metallocycle with the metal. Suitable hydrocarbyl-substituted organometalloid radicals include mono-, di- and tri-substituted organometalloid radicals of Group 14 elements wherein each of the hydrocarbyl groups contains from 1 to 20 carbon atoms. Examples of suitable hydrocarbyl-substituted organometalloid radicals include trimethylsilyl, triethylsilyl, ethyldimethylsilyl, methyldiethylsilyl, triphenylgermyl, and trimethylgermyl groups. Examples of Group 15 or 16 hetero atom containing moieties include amine, phosphine, ether or thioether moieties or divalent derivatives thereof, e. g. amide, phosphide, ether or thioether groups bonded to the transition metal or Lanthanide metal, and bonded to the hydrocarbyl group or to the hydrocarbyl- substituted metalloid containing group.

Examples of suitable anionic, delocalized π-bonded groups include cyclopentadienyl, indenyl, fluorenyl, tetrahydroindenyl, tetrahydrofluorenyl, octahydrofluorenyl, pentadienyl, cyclohexadienyl, dihydroanthracenyl, hexahydroanthracenyl, decahydroanthracenyl groups, and boratabenzene groups, as well as $C_{1-10}$ hydrocarbyl-substituted or $C_{1-10}$ hydrocarbyl-substituted silyl substituted derivatives thereof. Preferred anionic delocalized π-bonded groups are cyclopentadienyl, pentamethylcyclopentadienyl, tetramethylcyclopentadienyl, tetramethylsilylcyclopentadienyl, indenyl, 2,3-dimethylindenyl, fluorenyl, 2-methylindenyl, 2-methyl-4-phenylindenyl, tetrahydrofluorenyl, octahydrofluorenyl, and tetrahydroindenyl.

The boratabenzenes are anionic ligands which are boron containing analogues to benzene. They are previously known in the art having been described by G. Herberich, et al., in <u>Organometallics</u>, 14,1, 471-480 (1995). Preferred boratabenzenes correspond to the formula:

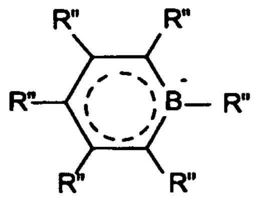

wherein R" is selected from the group consisting of hydrocarbyl, silyl, N,N-dialkylamino, N,N-diarylamino, or germyl, said R" having up to 20 non-hydrogen atoms. In complexes involving divalent derivatives of such delocalized n-bonded groups one atom thereof is bonded by means of a covalent bond or a covalently bonded divalent group to another atom of the complex thereby forming a bridged system.

Preferred complexes include those containing two K' groups with a bridging group linking the two groups. Preferred bridging groups are those corresponding to the formula $(ER'_2)_x$ wherein E is silicon, germanium, tin, or carbon, R' independently each occurrence is hydrogen or a group selected from silyl, hydrocarbyl, hydrocarbyloxy and combinations thereof, said R' having up to 30 carbon or silicon atoms, and x is 1 to 8. Preferably, R' independently each occurrence is methyl, ethyl, propyl, benzyl, tert-butyl, phenyl, methoxy, ethoxy or phenoxy.

Examples of the complexes containing two K' groups are compounds corresponding to the formula:

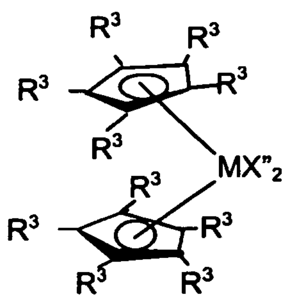 (I) ,

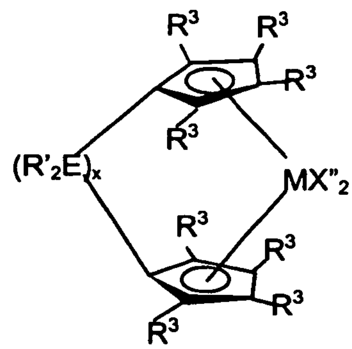 (II)

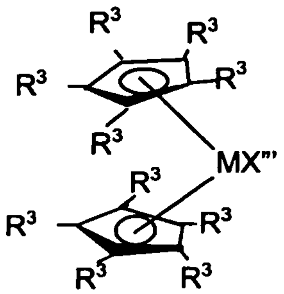

(III)

or

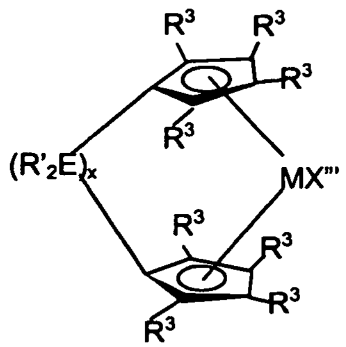

(IV)

wherein:

M is titanium, zirconium or hafnium, preferably zirconium or hafnium, in the +2, +3, or +4 formal oxidation state;

$R^3$ in each occurrence independently is selected from the group consisting of hydrocarbyl, silyl, germyl, halo, halohydrocarbyl, hydrocarbyloxy, hydrocarbylsiloxy, N,N-di(hydrocarbylsilyl)amino, N-hydrocarbyl-N-silylamino, N,N-di (hydrocarbyl)amino, hydrocarbyleneamino, di(hydrocarbyl)phosphino, hydrocarbylsulfido; or hydrocarbyloxy-substituted hydrocarbyl,, said $R^3$ having up to 20 non-hydrogen atoms, or adjacent $R^3$ groups together form a divalent derivative thereby forming a fused ring system, and

X" independently each occurrence is an anionic ligand group of up to 40 non-hydrogen atoms, or two X" groups together form a divalent anionic ligand group of up to 40 non-hydrogen atoms,

X"' independently each occurrence is a stabilizing anionic ligand group selected from 2-(N,N-dimethylaminobenzyl), m-(N,N-dimethylaminomethyl)phenyl, allyl, and $C_{1-10}$ hydrocarbyl substituted allyl, whereupon M is in the +3 formal oxidation state, or X"' independently each occurrence is a neutral, conjugated diene, or a silyl, germyl, or halohydrocarbyl substituted derivative thereof, having up to 40 atoms other than hydrogen, whereupon M is in the +2 formal oxidation state,

E is silicon, germanium, tin, or carbon,

R' independently each occurrence is hydrogen or a group selected from silyl, hydrocarbyl, hydrocarbyloxy and combinations thereof, said R' having up to 30 carbon or silicon atoms, and

x is 1 to 8.

The foregoing metal complexes are especially suited for the preparation of polymers having stereoregular molecular structure. In such capacity it is preferred that the complex possesses $C_s$ symmetry or possesses a chiral, stereorigid structure. Examples of the first type are compounds possessing different delocalized $\pi$-bonded ligand groups, such as one cyclopentadienyl group and one fluorenyl group. Similar systems based on Ti(IV) or Zr(IV) were disclosed for preparation of syndiotactic olefin polymers in Ewen, et al., J. Am. Chem. Soc. 110, 6255-6256 (1980). Examples of chiral structures include rac bis-indenyl complexes. Similar systems based on Ti(IV) or Zr(IV) were disclosed for preparation of isotactic olefin polymers in Wild et al., J. Organomet. Chem., 232, 233-47, (1982).

Additional examples of suitable metal complexes are compounds corresponding to the following formulas:

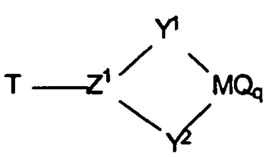

Formula 1

or

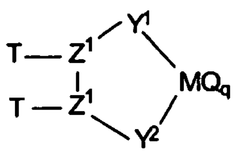

Formula 2

wherein:

M is titanium, zirconium, or hafnium in the +4, +3, or +2 oxidation state;

$Y^1$ and $Y^2$ are independently an anionic, cyclic or non-cyclic, n-bonded group;

$Z^1$ is boron or aluminum;

Q is a neutral, anionic or dianionic ligand group depending on the oxidation state of M;

q is 1, 2 or 3 depending on the oxidation state of M and the electronic nature of Q;

T independently each occurrence is:

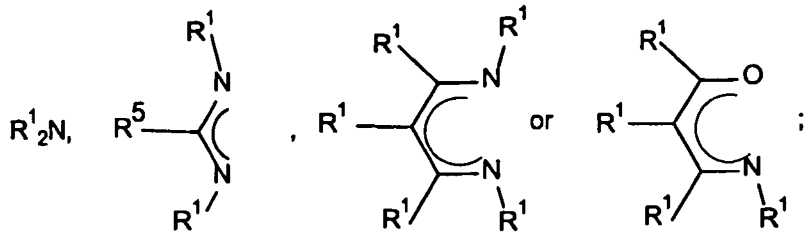

$R^1$ is independently each occurrence hydrogen, a hydrocarbyl group, a tri(hydrocarbyl)silyl group, or a tri(hydrocarbyl) silylhydrocarbyl group, said $R^1$ groups containing up to 20 atoms not counting hydrogen;

$R^5$ is $R^1$ or $N(R^1)_2$; and

two $R^1$ groups together or one or more $R^1$ groups together with $R^5$ may optionally be joined to form a ring structure.

Exemplary bridged ligands containing two n-bonded groups are: dimethylbis(cyclopentadienyl)silane, dimethylbis(tetramethylcyclopentadienyl)silane, dimethylbis(2-ethylcyclopentadien-1-yl)silane, dimethylbis(2-t-butylcyclopentadien-1-yl)silane, 2,2-bis(tetramethylcyclopentadienyl)propane, dimethylbis(inden-1-yl)silane, dimethylbis(tetrahydroinden-1-yl)silane, dimethylbis(fluoren-1-yl)silane, dimethylbis-(tetrahydrofluoren-1-yl)silane, dimethylbis(2-methyl-4-phenylinden-1-yl)-silane, dimethylbis(2-methylinden-1-yl)silane, dimethyl(cyclopentadienyl)(fluoren-1-yl)silane, dimethyl(cyclopentadienyl)(octahydrofluoren-1-yl)silane, dimethyl(cyclopentadienyl)(tetrahydrofluoren-1-yl)silane, (1, 1, 2, 2-tetramethy)-1, 2-bis(cyclopentadienyl)disilane, (1, 2-bis(cyclopentadienyl)ethane, and dimethyl(cyclopentadienyl)-1-(fluoren-1-yl)methane.

Preferred X" groups are selected from hydride, hydrocarbyl, silyl, germyl, halohydrocarbyl, halosilyl, silylhydrocarbyl and aminohydrocarbyl groups, or two X" groups together form a divalent derivative. Most preferred X" groups are $C_{1-20}$ hydrocarbyl groups.

Preferred X"' groups are 1,3-pentadiene, and 1,4-diphenylbutadiene.

A further class of metal complexes utilized in the present invention corresponds to the preceding formula $K'_kMZ'_mL_nX_p$, or a dimer thereof, wherein Z' is a divalent substituent of up to 50 non-hydrogen atoms that together with K' forms a metallocycle with M.

Preferred divalent Z' substituents include groups containing up to 30 non-hydrogen atoms comprising at least one atom that is oxygen, sulfur, boron or a member of Group 14 of the Periodic Table of the Elements directly attached to K', and a different atom, selected from the group consisting of nitrogen, phosphorus, oxygen or sulfur that is covalently bonded to M.

A preferred class of such Group 4 metal coordination complexes utilized in the present invention corresponds to the formula:

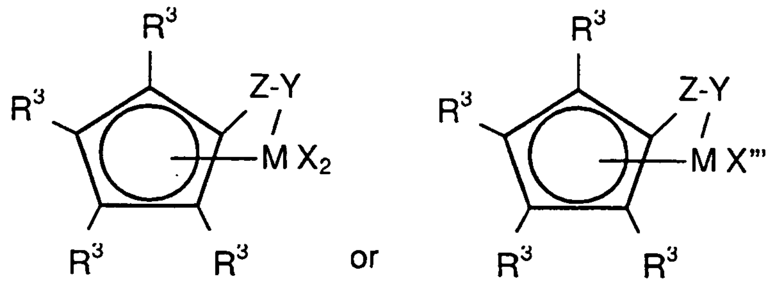

wherein:

M is titanium or zirconium;

$R^3$ in each occurrence independently is selected from the group consisting of hydrocarbyl, silyl, germyl, halo, halohydrocarbyl, hydrocarbyloxy, hydrocarbylsiloxy, N,N-di(hydrocarbylsilyl)amino, N-hydrocarbyl-N-silylamino, N,N-di (hydrocarbyl)amino, hydrocarbyleneamino, di(hydrocarbyl)phosphino, hydrocarbvlsulfido; or hydrocarbyloxy-sub-

stituted hydrocarbyl, said $R^3$ having up to 20 non-hydrogen atoms, or adjacent $R^3$ groups together form a divalent derivative thereby forming a fused ring system,
each X is a halo, hydrocarbyl, hydrocarbyloxy or silyl group, said group having up to 20 non-hydrogen atoms, or two X groups together form a divalent derivative thereof;
X"' is a neutral, conjugated diene, or a silyl, germyl, or halohydrocarbyl substituted derivative thereof, having up to 40 atoms other than hydrogen, whereupon M is in the +2 formal oxidation state,
Y is -O-, -S-, -NR'-, or -PR'-, and
Z is $SiR'_2$, $CR'_2$, $SiR'_2SiR'_2$, $CR'_2CR'_2$, CR'=CR', $CR'_2SiR'_2$, or $GeR'_2$, wherein R' independently each occurrence is hydrogen or a group selected from silyl, hydrocarbyl, hydrocarbyloxy and combinations thereof, said R' having up to 30 carbon or silicon atoms.

Additional suitable complexes correspond to the formula:

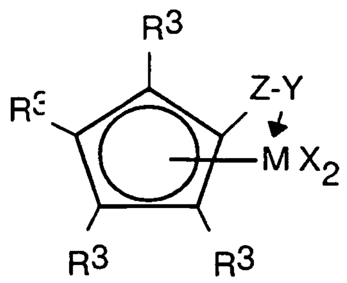

wherein:

M is titanium or zirconium, preferably titanium in the +3 formal oxidation state;
$R^3$ in each occurrence independently is selected from the group consisting of hydrocarbyl, silyl, germyl, halo, halohydrocarbyl, hydrocarbyloxy, hydrocarbylsiloxy, N,N-di(hydrocarbylsilyl)amino, N-hydrocarbyl-N-silylamino, N,N-di(hydrocarbyl)amino, hydrocarbyleneamino, di(hydrocarbyl)phosphino, hydrocarbylsulfido; or hydrocarbyloxy-substituted hydrocarbyl, said $R^3$ having up to 20 non-hydrogen atoms, or adjacent $R^3$ groups together form a divalent derivative thereby forming a fused ring system,
each X is a halo, hydrocarbyl, hydrocarbyloxy or silyl group, said group having up to 20 non-hydrogen atoms, or two X groups together form a divalent derivative thereof;
R' independently each occurrence is hydrogen or a group selected from silyl, hydrocarbyl, hydrocarbyloxy and combinations thereof, said R' having up to 30 carbon or silicon atoms,
x is 1 to 8,
Y is -OR, or $-NR_2$; and
Z is $SiR'_2$, $CR'_2$, $SiR'_2SiR'_2$, $CR'_2CR'_2$, CR'=CR', $CR'_2SiR'_2$, or $GeR'_2$, wherein R' is as previously defined.

Additional suitable complexes correspond to the formula:

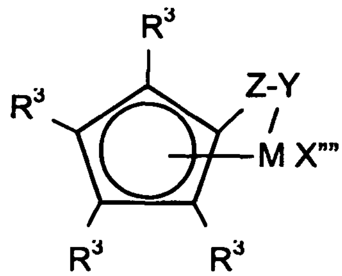

wherein:

M is titanium or zirconium, preferably titanium in the +3 formal oxidation state;

$R^3$ in each occurrence independently is selected from the group consisting of hydrocarbyl, silyl, germyl, halo, halohydrocarbyl, hydrocarbyloxy, hydrocarbylsiloxy, N,N-di(hydrocarbylsilyl)amino, N-hydrocarbyl-N-silylamino, N,N-di (hydrocarbyl)amino, hydrocarbyleneamino, di(hydrocarbyl)phosphino, hydrocarbylsulfido; or hydrocarbyloxy-substituted hydrocarbyl, said $R^3$ having up to 20 non-hydrogen atoms, or adjacent $R^3$ groups together form a divalent derivative thereby forming a fused ring system,
X'''' is 2-(N,N-dimethylaminobenzyl), m-(N,N-dimethylaminomethyl)phenyl, allyl, and $C_{1-10}$ hydrocarbyl substituted allyl;
Y is -O-, -S-, -NR'-, or -PR'-, and
Z is $SiR'_2$, $CR'_2$, $SiR'_2SiR'_2$, $CR'_2CR'_2$, CR'=CR', $CR'_2SiR'_2$, or $GeR'_2$, wherein R' is as previously defined.

Illustrative Group 4 metal complexes that may be employed in the practice of the present invention include:

biscyclopentadienyl complexes such as :

bis(cyclopentadienyl)zirconium dichloride,
bis(cyclopentadienyl)zirconium dimethyl,
bis(t-butylcyclopentadienyl)zirconium dichloride,
bis(t-butylcyclopentadienyl)zirconium dimethyl,
(fluorenyl)(cyclopentadienyl)zirconium dichloride,
(fluorenyl)(cyclopentadienyl)zirconium dimethyl,
bis(indenyl)zirconium dichloride,
bis(indenyl)zirconium dimethyl,
rac-dimethylsilane-bis(cyclopentadienyl)zirconium dichloride,
rac-dimethylsilane-bis(cyclopentadienyl)zirconium dimethyl,
rac-dimethylsilane-bis(tetramethylcyclopentadienyl)zirconium dichloride,
rac-dimethylsilane-bis(tetramethylcyclopentadienyl)zirconium dimethyl,
rac-dimethylsilane-bis{1-(2-methyl-4-phenylindenyl)}zirconium dichloride,
rac-dimethylsilane-bis{1-(2-methyl-4-(α-naphthyl)indenyl)}zirconium dichloride,
rac-dimethylsilane-bis{1-(2-methyl-4-(β-naphthyl)indenyl}zirconium dichloride,
rac-1,2-ethylene-bis{1-(2-methyl-4-phenylindenyl)}zirconium dichloride,
rac-1,2-ethylene-bis{1-(2-methyl-4-(α-naphthyl)indenyl)}zirconium dichloride,
rac-dimethylsilane-bis(cyclopentadienyl)zirconium(II) 1,4-diphenyl-1,3-butadiene,
rac-dimethylsilane-bis(cyclopentadienyl)zirconium(II) 2,4-hexadiene,
rac-dimethylsilane-bis{1-(2-methyl-4-phenylindenyl)}zirconium(II) 1,3-pentadiene,
rac-dimethylsilane-bis{1-(2-methyl-4-(α-naphthyl)indenyl)}zirconium(II) 1,3-pentadiene,
rac-1,2-ethylene-bis{1-(2-methyl-4-phenylindenyl)}zirconium(II) 1,3-pentadiene,
rac-1,2-ethylene-bis{1-(2-methyl-4-(α-naphthyl)indenyl)}zirconium(II) 1,3-pentadiene,
rac-1,2-ethylene-bis{1-(2-methyl-4-(β-naphthyl)indenyl}zirconium(II) 1,3-pentadiene,
rac-1,2-ethylene-bis{1-(2-methyl-4-(1-anthracenyl)indenyl)}zirconium(II) 1,3-pentadiene,
rac-1,2-ethylene-bis{1-(2-methyl-4-(2-anthracenyl)indenyl)}zirconium(II) 1,3-pentadiene,
rac-1,2-ethylene-bis{1-(2-methyl-4-(9-anthracenyl)indenyl)}zirconium(II) 1,3-pentadiene,
rac-1,2-ethylene-bis{1-(2-methyl-4-(9-phenanthryl)indenyl)}zirconium(II) 1,3-pentadiene,
rac-1,2-ethylene-bis{1-(2-methyl-4-phenylindenyl)}zirconium(II) 1,4-diphenyl-1,3-butadiene,
rac-1,2-ethylene-bis{1-(2-methyl-4-(α-naphthyl)indenyl)}zirconium(II) 1,4-diphenyl-1,3-butadiene, and
rac-1,2-ethylene-bis{1-(2-methyl-4-(β-naphthyl)indenyl}zirconium(II) 1,4-diphenyl-1,3-butadiene.

Examples of metal complexes containing a single cyclic ligand containing delocalized π-electrons and a bridging structure to the metal (known as constrained geometry complexes) used in the present invention wherein the metal is in the +4 formal oxidation state include the following complexes:

(tert-butylamido)(tetramethylcyclopentadienyl)dimethylsilanetitanium dichloride,
(cyclohexylamido)(tetramethylcyclopentadienyl)dimethylsifanetitanium dichloride,
(cyclododecylamido)(tetramethylcyclopentadienyl)dimethylsilanetitanium dichloride,
(tert-butylamido)(2-methyl-4-phenylinden-1-yl)dimethylsilanetitanium dichloride,
(tert-butylamido)(3-pyrrolytinden-1-yl)dimethylsilanetitanium dichloride,
(cyclohexylamido)(3-pyrrolylinden-1-yl)dimethylsilanetitanium dichloride,
(tert-butylamido)($\eta^5$-3-phenyl-s-indacen-1-yl)dimethylsilanetitanium dichloride,
(tert-butylamido)($\eta^5$-2-methyl-3-biphenyl-s-indacen-1-yl)dimethylsilanetitanium dichloride,

(tert-butylamido)($\eta^5$-3-phenyl-gem-dimethylacenaphthalen-1yl)dimethylsilanetitanium dichloride,
(tert-butylamido)(tetramethylcyclopentadienyl)dimethylsilanetitanium dimethyl,
(cyclohexylamido)(tetramethylcyclopentadienyl)dimethylsilanetitanium dimethyl,
(cyclododecylamido)(tetramethylcyclopentadienyl)dimethylsilanetitanium dimethyl,
(tert-butylamido)(2-methyl-4-phenylinden-1-yl)dimethylsilanetitanium dimethyl,
(tert-butylamido)(3-pyrrolylinden-1-yl)dimethylsilanetitanium dimethyl,
(cyclohexylamido)(3-pyrrolylinden-1-yl)dimethylsilanetitanium dimethyl,
(tert-butylamido)($\eta^5$-3-phenyl-s-indacen-1-yl)dimethylsilanetitanium dimethyl,
(tert-butylamido)($\eta^5$-2-methyl-3-biphenyl-s-indacen-1-yl)dimethylsilanetitanium dimethyl,
(tert-butylamido)($\eta^5$-3-phenyl-gem-dimethylacenaphthalen-1yl)dimethylsilanetitanium dimethyl,
(tert-butylamido)(tetramethylcyclopentadienyl)dimethylsilanetitanium 1,4-diphenyl-1,3-butadiene,
(cyclohexylamido)(tetramethylcyclopentadienyl)dimethylsilanetitanium 1,4-diphenyl-1,3-butadiene,
(cyclododecylamido)(tetramethylcyclopentadienyl)dimethylsilanetitanium 1,4-diphenyl-1,3-butadiene,
(tert-butylamido)(2-methyl-4-phenylinden-1-yl)dimethylsilanetitanium 1,4-diphenyl-1,3-butadiene,
(tert-butylamido)(3-pyrrolylinden-1-yl)dimethylsilanetitanium 1,4-diphenyl-1,3-butadiene,
(cyclohexylamido)(3-pyrrolylinden-1-yl)dimethylsilanetitanium 1,4-diphenyl-1,3-butadiene,
(tert-butylamido)($\eta^5$-3-phenyl-s-indacen-1-yl)dimethylsilanetitanium 1,4-diphenyl-1,3-butadiene,
(tert-butylamido)($\eta^5$-2-methyl-3-biphenyl-s-indacen-1-yl)dimethylsilanetitanium 1,4-diphenyl-1,3-butadiene,
(tert-butylamido)($\eta^5$-3-phenyl-gem-dimethylacenaphthalen-1yl)dimethylsilanetitanium 1,4-diphenyl-1,3-butadiene,
(tert-butylamido)(tetramethylcyclopentadienyl)dimethylsilanetitanium 1,3-pentadiene,
(cyclohexylamido)(tetramethylcyclopentadienyl)dimethylsilanetitanium 1,3-pentadiene,
(cyclododecylamido)(tetramethylcyclopentadienyl)dimethylsilanetitanium 1,3-pentadiene,
(tert-butylamido)(2-methyl-4-phenylinden-1-yl)dimethylsilanetitanium 1,3-pentadiene,
(tert-butylamido)(3-pyrrolylinden-1-yl)dimethylsilanetitanium 1,3-pentadiene,
(cyclohexylamido)(3-pyrrolyl'inden-1-yl)dimethylsilanetitanium 1,3-pentadiene,
(tert-butylamido)($\eta^5$-3-phenyl-s-indacen-1-yl)dimethylsilanetitanium 1,3-pentadiene, and
(tert-butylamido)($\eta^5$-2-methyl-3-biphenyl-s-indacen-1-yl)dimethylsilanetitanium 1,3-pentadiene.

The preferred Group 4 metal complexes are rendered catalytically active by combination with an activating cocatalyst or by use of an activating technique. Suitable activating cocatalysts for use herein include polymeric or oligomeric alumoxanes, especially methylalumoxane, triisobutyl aluminum modified methylalumoxane, diisobutylalumoxane or perfluoroaryl modified alumoxane; strong Lewis acids, such as $C_{1-30}$ hydrocarbyl substituted Group 13 compounds, especially tri(hydrocarbyl)aluminum- or tri(hydrocarbyl)boron- compounds and halogenated derivatives thereof, having from 1 to 10 carbons in each hydrocarbyl or halogenated hydrocarbyl group, especially tris(pentafluorophenyl)borane; and nonpolymeric, inert, compatible, noncoordinating, ion forming compounds (including the use of such compounds under oxidizing conditions). A suitable activating technique is bulk electrolysis (explained in more detail hereinafter). Combinations of the foregoing activating cocatalysts and techniques may also be employed if desired. The foregoing activating cocatalysts and activating techniques have been previously taught with respect to different metal complexes in the following references: EP-A-277,003, US-A-5,153,157, US-A-5,064,802, EP-A-468,651, EP-A-520,732, and WO93/23412.

Suitably, polymeric or oligomeric alumoxanes, when used, are present in a molar amount compared to metal complex from 10:1 to 1000:1, preferably from 50:1 to 200:1. Aluminoxanes, or alkylaluminoxanes, are generally believed to be oligomeric or polymeric alkylaluminoxy compounds, including cyclic oligomers. Generally such compounds contain, on average 1.5 alkyl groups per aluminum atom, and are prepared by reaction of trialkylaluminum compounds or mixtures of compounds with water. Perfluoroaryl substituted alumoxanes are readily prepared by combining an alkylalumoxane, which may also contain residual quantities of trialkylaluminum compound, with a fluoroaryl ligand source, preferably a strong Lewis acid containing fluoroaryl ligands, followed by removing byproducts formed by the ligand exchange. Preferred fluoroaryl ligand sources are trifluoroarylboron compounds, most preferably tris(pentafluorophenyl)boron, which result in trialkylboron ligand exchange products, that are relatively volatile and easily removable from the reaction mixture.

The reaction may be performed in any aliphatic, alicyclic or aromatic liquid diluent or mixture thereof. Preferred are $C_{6-8}$ aliphatic and alicyclic hydrocarbons and mixtures thereof, including hexane, heptane, cyclohexane, and mixed fractions such as Isopar™ E, available from Exxon Chemicals Inc. After contacting of the alkylalumoxane and source of fluoroaryl ligand the reaction mixture may be purified to remove ligand exchange products, especially any trialkylboron compounds by any suitable technique. Alternatively, the metal complex catalyst may first be combined with the reaction mixture prior to removing the residual ligand exchange products.

Suitable techniques for removing alkyl exchange byproducts from the reaction mixture include degassing optionally at reduced pressures, distillation, solvent exchange, solvent extraction, extraction with a volatile agent, contacting with a zeolite or molecular sieve, and combinations of the foregoing techniques, all of which are conducted according

to conventional procedures. Purity of the resulting product may be determined by $^{11}B$ NMR of the resulting product. Preferably the quantity of residual alkyl exchange product is less than 10 weight percent, based on solids content, preferably less than 1.0 weight percent, most preferably less than 0.1 weight percent.

Suitable nonpolymeric, inert, compatible, noncoordinating, ion forming compounds useful as cocatalysts in one embodiment of the present invention comprise a cation which is a Bronsted acid capable of donating a proton, and a compatible, noncoordinating, anion, $A^-$. Preferred anions are those containing a single coordination complex comprising a charge-bearing metal or metalloid core which anion is capable of balancing the charge of the active catalyst species (the metal cation) which is formed when the two components are combined. Also, said anion can be displaced by olefinic, diolefinic and acetylenically unsaturated compounds or other neutral Lewis bases such as ethers or nitriles. Suitable metals include, but are not limited to, aluminum, gold and platinum. Suitable metalloids include, but are not limited to, boron, phosphorus, and silicon. Compounds containing anions which comprise coordination complexes containing a single metal or metalloid atom are well known and many, particularly such compounds containing a single boron atom in the anion portion, are available commercially.

Preferably such cocatalysts may be represented by the following general formula:

$$(L^*\text{-}H)^+_d\ A^{d-}$$

wherein:

L* is a neutral Lewis base;
$(L^*\text{-}H)^+$ is a Bronsted acid;
$A^{d-}$ is a noncoordinating, compatible anion having a charge of d-, and
d is an integer from 1 to 3.

More preferably d is one, that is, $A^{d-}$ is $A^-$.

Highly preferably, A- corresponds to the formula:

$$[BQ_4]^-$$

wherein:

B is boron in the +3 formal oxidation state; and
Q independently each occurrence is selected from hydride, dialkylamido, halide, alkoxide, aryloxide, hydrocarbyl, halocarbyl, and halosubstituted-hydrocarbyl radicals, said Q having up to 20 carbons with the proviso that in not more than one occurrence is Q halide.

In a more highly preferred embodiment, Q is a fluorinated $C_{1-20}$ hydrocarbyl group, most preferably, a fluorinated aryl group, especially, pentafluorophenyl.

Illustrative, but not limiting, examples of ion forming compounds comprising proton donatable cations which may be used as activating cocatalysts in the preparation of the catalysts utilized in this invention are tri-substituted ammonium salts such as:

trimethylammonium tetraphenylborate,
methyldioctadecylammonium tetraphenylborate,
triethylammonium tetraphenylborate,
tripropylammonium tetraphenylborate,
tri(n-butyl)ammonium tetraphenylborate,
methyltetradecyloctadecylammonium tetraphenylborate,
N,N-dimethylanilinium tetraphenylborate,
N,N-diethylanilinium tetraphenylborate,
N,N-dimethyl(2,4,6-trimethylanilinium) tetraphenylborate,
trimethylammonium tetrakis(pentafluorophenyl)borate,
methylditetradecylammonium tetrakis(pentafluorophenyl)borate,
methyldioctadecylammonium tetrakis(pentafluorophenyl)borate,
triethylammonium tetrakispentafluorophenyl)borate,
tripropylammonium tetrakis(pentafluorophenyl)borate,
tri(n-butyl)ammonium tetrakis(pentafluorophenyl)borate,
tri(sec-butyl)ammonium tetrakis(pentafluorophenyl)borate,

N,N-dimethylanilinium tetrakis(pentafluorophenyl)borate,
N,N-diethylanilinium tetrakis(pentafluorophenyl)borate,
N,N-dimethyl(2,4,6-trimethylanilinium) tetrakis(pentafluorophenyl)borate,
trimethylammonium tetrakis(2,3,4,6-tetrafluorophenylborate,
triethylammonium tetrakis(2,3,4,6-tetrafluorophenyl)borate,
tripropylammonium tetrakis(2,3,4,6-tetrafluorophenyl)borate,
tri(n-butyl)ammonium tetrakis(2,3,4,6-tetrafluorophenyl)borate,
dimethyl(t-butyl)ammonium tetrakis(2,3,4,6-tetrafluorophenyl)borate,
N,N-dimethylanilinium tetrakis(2,3,4,6-tetrafluorophenyl)borate,
N,N-diethylanilinium tetrakis(2,3,4,6-tetrafluorophenyl)borate, and
N,N-dimethyl-(2,4,6-trimethylanilinium) tetrakis-(2,3,4,6-tetrafluorophenyl)borate.

Dialkyl ammonium salts such as:

dioctadecylammonium tetrakis(pentafluorophenyl)borate,
ditetradecylammonium tetrakis(pentafluorophenyl)borate, and
dicyclohexylammonium tetrakis(pentafluorophenyl)borate.

Tri-substituted phosphonium salts such as:

triphenylphosphonium tetrakis(pentafluorophenyl)borate,
methyldioctadecylphosphonium tetrakis(pentafluorophenyl)borate, and
tri(2,6-dimethylphenyl)phosphonium tetrakis(pentafluorophenyl)borate.

Preferred are tetrakis(pentafluorophenyl)borate salts of long chain alkyl trisubstituted ammonium complexes, especially trialkylammonium complexes containing 1 or 2 $C_{14}$-$C_{20}$ alkyl groups, more especially methyldi(octadecyl) ammonium tetrakis(pentafluorophenyl)borate and methyldi(tetradecyl)-ammonium tetrakis(pentafluorophenyl)borate, or mixtures including the same Such mixtures include protonated ammonium cations derived from amines comprising two $C_{14}$, $C_{16}$ or $C_{18}$ alkyl groups and one methyl group. Such amines are available from Witco Corp., under the trade name Kemamine™ T9701, and from Akzo-Nobel under the trade name Armeen™ M2HT.
Another suitable ion forming, activating cocatalyst comprises a salt of a cationic oxidizing agent and a noncoordinating, compatible anion represented by the formula: $(Ox^{e+})_d\ (A^{d-})_e$, wherein:

$Ox^{e+}$ is a cationic oxidizing agent having charge e+;
e is an integer from 1 to 3; and
$A^{d-}$, and d are as previously defined.

Examples of cationic oxidizing agents include: ferrocenium, hydrocarbyl-substituted ferrocenium, $Ag^+$, or $Pb^{+2}$. Preferred embodiments of $A^{d-}$ are those anions previously defined with respect to the Bronsted acid containing activating cocatalysts, especially tetrakis(pentafluorophenyl)borate.
Another suitable ion forming, activating cocatalyst comprises a compound which is a salt of a carbenium ion or silylium ion and a noncoordinating, compatible anion represented by the formula:

$$©^+\ A^-$$

wherein:

$©^+$ is a $C_{1-30}$ carbenium ion or silylium ion; and

$A^-$ is as previously defined.

A preferred carbenium ion is the trityl cation, that is triphenylcarbenium. A preferred silylium ion is triphenylsilylium.
The activating technique of bulk electrolysis involves the electrochemical oxidation of the metal complex under electrolysis conditions in the presence of a supporting electrolyte comprising a noncoordinating, inert anion. In the technique, solvents, supporting electrolytes and electrolytic potentials for the electrolysis are used such that electrolysis byproducts that would render the metal complex catalytically inactive are not substantially formed during the reaction. More particularly, suitable solvents are materials that are: liquids under the conditions of the electrolysis (generally

temperatures from 0 to 100°C), capable of dissolving the supporting electrolyte, and inert. "Inert solvents" are those that are not reduced or oxidized under the reaction conditions employed for the electrolysis. It is generally possible in view of the desired electrolysis reaction to choose a solvent and a supporting electrolyte that are unaffected by the electrical potential used for the desired electrolysis. Preferred solvents include difluorobenzene (all isomers), DME, and mixtures thereof.

The electrolysis may be conducted in a standard electrolytic cell containing an anode and cathode (also referred to as the working electrode and counter electrode respectively). Suitably materials of construction for the cell are glass, plastic, ceramic and glass coated metal. The electrodes are prepared from inert conductive materials, by which are meant conductive materials that are unaffected by the reaction mixture or reaction conditions. Platinum or palladium are preferred inert conductive materials. Normally, an ion permeable membrane such as a fine glass frit separates the cell into separate compartments, the working electrode compartment and counter electrode compartment. The working electrode is immersed in a reaction medium comprising the metal complex to be activated, solvent, supporting electrolyte, and any other materials desired for moderating the electrolysis or stabilizing the resulting complex. The counter electrode is immersed in a mixture of the solvent and supporting electrolyte. The desired voltage may be determined by theoretical calculations or experimentally by sweeping the cell using a reference electrode such as a silver electrode immersed in the cell electrolyte. The background cell current, the current draw in the absence of the desired electrolysis, is also determined. The electrolysis is completed when the current drops from the desired level to the background level. In this manner, complete conversion of the initial metal complex can be easily detected.

Suitable supporting electrolytes are salts comprising a cation and an inert, compatible, noncoordinating anion, $A^-$. Preferred supporting electrolytes are salts corresponding to the formula: $G^+A^-$; wherein:

$G^+$ is a cation which is nonreactive towards the starting and resulting complex, and

A- is a noncoordinating, compatible anion.

Examples of cations, $G^+$, include tetrahydrocarbyl substituted ammonium or phosphonium cations having up to 40 nonhydrogen atoms. A preferred cation is the tetra-n-butylammonium cation.

During activation of the complexes utilized in the present invention by bulk electrolysis the cation of the supporting electrolyte passes to the counter electrode and A-migrates to the working electrode to become the anion of the resulting oxidized product. Either the solvent or the cation of the supporting electrolyte is reduced at the counter electrode in equal molar quantity with the amount of oxidized metal complex formed at the working electrode. Preferred supporting electrolytes are tetrahydrocarbylammonium salts of tetrakis(perfluoroaryl) borates having from 1 to 10 carbons in each hydrocarbyl group, especially tetra-n-butylammonium tetrakis(pentafluorophenyl) borate.

In general, the active catalyst can be prepared by combining the metal complex and activator in a suitable solvent at a temperature within the range from -100°C to 300°C. The silane or hydrocarbylsilane adjuvant may be added separately or simultaneously with the remaining components. The catalyst composition may be separately prepared prior to addition of the monomers to be polymerized or prepared *in situ* by combination of the various components in the presence of the monomers to be polymerized. The catalysts' components are sensitive to both moisture and oxygen and should be handled and transferred in an inert atmosphere.

Preferred monomers for use herein include olefins having from 2 to 20,000, preferably from 2 to 20, more preferably from 2 to 8 carbon atoms and combinations of two or more of such olefins. Particularly suitable olefins include: ethylene, propylene, 1-butene, 1-pentene, 4-methylpentene-1, 1-hexene, 1-heptene, 1-octene, 1-nonene, 1-decene, 1-undecene, 1-dodecene, 1-tridecene, 1-tetradecene, 1-pentadecene, or combinations thereof, as well as long chain vinyl terminated oligomeric or polymeric reaction products formed during the polymerization, and $C_{10-30}$ $\alpha$-olefins specifically added to the reaction mixture in order to produce relatively long chain branches in the resulting polymers. Preferably, the olefins are ethylene, propene, 1-butene, 4-methyl-1-pentene, 1-hexene, 1-octene, styrene, halo- or alkyl substituted styrenes, and tetrafluoroethylene. Other suitable monomers include vinylcyclobutene, and dienes, such as 1,4-hexadiene, dicyclopentadiene, ethylidene norbornene, and 1,7-octadiene. Mixtures of the above-mentioned monomers may also be employed.

Suitable solvents or diluents for the catalyst preparation include any of the solvents known in the prior art including, but not necessarily limited to, straight and branched-chain hydrocarbons such as $C_{6-12}$ alkanes (pentane, hexane, heptane, octane and mixtures thereof); $C_{6-12}$ cyclic and alicyclic hydrocarbons such as cyclohexane, cycloheptane, methylcyclohexane, methylcycloheptane and mixtures thereof and $C_{6-12}$ aromatic and alkyl-substituted aromatic compounds such as benzene, toluene, xylene, decalin, and mixtures thereof, as well as mixtures of the foregoing compounds.

The polymerization may be conducted under slurry, solution, bulk, gas phase or suspension polymerization conditions or other suitable reaction conditions. The polymerization can be conducted at temperatures of from 0°C to 160°C, preferably from 25°C to 100°C for a time sufficient to produce the desired polymer. Typical reaction times are

from one minute to 100 hours, preferably from 1 to 10 hours. The optimum reaction time or reactor residence time will vary depending upon the temperature, solvent and other reaction conditions employed. The polymerization can be conducted at subatmospheric pressure as well as super-atmospheric pressure, suitably at a pressure within the range of 1 to 500 psig (6.9 kPa-3,400 kPa). The use of ambient or low pressures, for example, 1-5 psig (6.9-34.5 kPa) is preferred in view of lower capital and equipment costs.

The polymerization may be conducted in the presence of an inert diluent or solvent or in the absence thereof, that is, in the presence of excess monomer. Examples of suitable diluents or solvents include $C_{6-20}$ aliphatic, cycloaliphatic, aromatic and halogenated aliphatic or aromatic hydrocarbons, as well as mixtures thereof. Preferred diluents comprise the $C_{6-10}$ alkanes, toluene and mixtures thereof. A particularly desirable diluent for the polymerization is iso-octane, iso-nonane or blends thereof such as Isopar-E™, available from Exxon Chemical Company. Suitable amounts of solvent are employed to provide a monomer concentration from 5 percent to 100 percent by weight.

The molar ratio of addition polymerizable monomer (including alkenylsilane) to catalyst (in terms of the Group 4 metal content) may range from 100:1 to $1x10^{10}$:1, preferably from 1000:1 to $1x10^{6}$:1. Typically in the preparation of ethylene/ olefin copolymers the molar ratio of comonomer to monomer(s) used in the polymerization depends upon the desired density for the composition being produced and is 0.5 or less. Desirably, when producing materials with a density range of from 0.91 to 0.93 the comonomer to monomer ratio is less than 0.2, preferably less than 0.05, even more preferably less than 0.02, and may even be less than 0.01. Typically, the molar ratio of hydrogen to monomer in the process is less than 0.5, preferably less than 0.2, more preferably less than 0.05, even more preferably less than 0.02, due to the presence of silane branching agent, which performs many of the functions of hydrogen with respect to molecular weight control. The molar ratio of silane or hydrocarbylsilane branching agent to monomer charged to the reactor is desirably less than 0.5, preferably less than 0.2, and more preferably less than 0.1.

As in other similar polymerizations, it is highly desirable that the monomers and solvents employed be of sufficiently high purity that catalyst deactivation does not occur. Any suitable technique for monomer purification such as devolatilization at reduced pressures, contacting with molecular sieves or high surface area alumina, deaeration, or a combination thereof may be employed.

Purification of the resulting polymer to remove entrained catalyst and cocatalyst may also be desired by the practitioner. Such contaminants may generally be identified by residues of ash on pyrolysis of the polymer that are attributable to catalyst or cocatalyst metal values. A suitable technique for removing such compounds is by solvent extraction, for example, extraction utilizing hot, high boiling chlorinated solvents, acids or bases such as caustic followed by filtration.

A support may be optionally present in the catalyst formulation especially in a gas phase or slurry polymerization. Suitable supports include any inert, particulate material, but most suitably is a metal oxide, preferably alumina, silica, or an aluminosilicate material. Suitable particle sizes are from 1 to 1000 $\mu$m, preferably from 10 to 100 $\mu$m. Most desired supports are calcined silica, which may be treated to reduce surface hydroxyl groups by reaction with a silane, or similar reactive compound. Any suitable means for including such support in the catalyst formulation may be used, such as by dispersing the components in a liquid and contacting the same with the support and thereafter drying, by spraying, or coating the support with such liquid and thereafter removing the liquid, or by coprecipitating the cocatalyst and a support material from a liquid medium.

The polymerization is desirably carried out as a continuous polymerization, in which catalyst components, monomer(s), chain branching agent, and optionally solvent and diene are continuously supplied to the reaction zone and polymer product continuously removed therefrom. Within the scope of the terms "continuous" and "continuously" as used in this context are those processes in which there are intermittent additions of reactants and removal of products at small regular intervals, so that, over time, the overall process is continuous.

In one embodiment of operation, the polymerization is conducted in a continuous solution polymerization system comprising two reactors connected in series or parallel. In one reactor a relatively high molecular weight product (Mw from 300,000 to 600,000, more preferably 400,000 to 500,000) is formed while in the second reactor a product of a relatively low molecular weight (Mw 50,000 to 300,000) is formed. The final product is a blend of the two reactor effluents which are combined prior to devolatilization to result in a uniform blend of the two polymer products. Such a dual reactor process allows for the preparation of products having improved properties. In a preferred embodiment the reactors are connected in series, that is effluent from the first reactor is charged to the second reactor and fresh monomer, solvent and hydrogen is added to the second reactor. Reactor conditions are adjusted such that the weight ratio of polymer produced in the first reactor to that produced in the second reactor is from 20:80 to 80:20. In addition the temperature of the second reactor is controlled to produce the lower molecular weight product. This system beneficially allow for production of EPDM products having a large range of Mooney viscosities, as well as excellent strength and processability. Preferably the Mooney viscosity (ASTM D1646-94, ML1+4 @125°C) of the resulting product is adjusted to fall in the range from 1 to 200, preferably from 5 to 150 and most preferably from 10 to 110.

The polymerization process utilized in the present invention can also be employed to advantage in a gas phase copolymerization process. Such processes are used commercially on a large scale for the manufacture of high density

polyethylene (HDPE), medium density polyethylene (MDPE), linear low density polyethylene (LLDPE) and polypropylene. The gas phase process employed can be, for example, of the type which employs a mechanically stirred bed or a gas fluidized bed as the polymerization reaction zone. Preferred is the process wherein the polymerization reaction is carried out in a vertical cylindrical polymerization reactor containing a fluidized bed of polymer particles supported or suspended above a perforated plate, the fluidization grid, by a flow of fluidization gas.

The gas employed to fluidize the bed comprises the monomer or monomers to be polymerized, and also serves as a heat exchange medium to remove the heat of reaction from the bed. The hot gases emerge from the top of the reactor, normally via a tranquilization zone, also known as a velocity reduction zone, having a wider diameter than the fluidized bed and wherein fine particles entrained in the gas stream have an opportunity to gravitate back into the bed. It can also be advantageous to use a cyclone to remove ultra-fine particles from the hot gas stream. The gas is then normally recycled to the bed by means of a blower or compressor and one or more heat exchangers to strip the gas of the heat of polymerization.

A preferred method of cooling of the bed, in addition to the cooling provided by the cooled recycle gas, is to feed a volatile liquid to the bed to provide an evaporative cooling effect, often referred to as operation in the condensing mode. The volatile liquid employed in this case can be, for example, a volatile inert liquid, for example, a saturated hydrocarbon having 3 to 8, preferably 4 to 6, carbon atoms. In the case that the monomer or comonomer itself is a volatile liquid, or can be condensed to provide such a liquid, this can suitably be fed to the bed to provide an evaporative cooling effect. Examples of olefin monomers which can be employed in this manner are olefins containing three to eight, preferably three to six carbon atoms. The volatile liquid evaporates in the hot fluidized bed to form gas which mixes with the fluidizing gas. If the volatile liquid is a monomer or comonomer, it will undergo some polymerization in the bed. The evaporated liquid then emerges from the reactor as part of the hot recycle gas, and enters the compression/heat exchange part of the recycle loop. The recycle gas is cooled in the heat exchanger and, if the temperature to which the gas is cooled is below the dew point, liquid will precipitate from the gas. This liquid is desirably recycled continuously to the fluidized bed. It is possible to recycle the precipitated liquid to the bed as liquid droplets carried in the recycle gas stream. This type of process is described, for example in EP-89691; US-A-4,543,399; WO-94/25495 and US-A-5,352,749. A particularly preferred method of recycling the liquid to the bed is to separate the liquid from the recycle gas stream and to reinject this liquid directly into the bed, preferably using a method which generates fine droplets of the liquid within the bed. This type of process is described in WO-94/28032. The polymerization reaction occurring in the gas fluidized bed is catalyzed by the continuous or semi-continuous addition of catalyst. Such catalyst can be supported on an inorganic or organic support material as described above. The catalyst can also be subjected to a prepolymerization step, for example, by polymerizing a small quantity of olefin monomer in a liquid inert diluent, to provide a catalyst composite comprising catalyst particles embedded in olefin polymer particles.

The polymer is produced directly in the fluidized bed by catalyzed copolymerization of the monomer and one or more comonomers on the fluidized particles of catalyst, supported catalyst or prepolymer within the bed. Start-up of the polymerization reaction is achieved using a bed of preformed polymer particles, which are preferably similar to the target polyolefin, and conditioning the bed by drying with inert gas or nitrogen prior to introducing the catalyst, the monomers and any other gases which it is desired to have in the recycle gas stream, such as a diluent gas, hydrogen chain transfer agent, or an inert condensable gas when operating in gas phase condensing mode. The produced polymer is discharged continuously or discontinuously from the fluidized bed as desired.

The gas phase processes most suitable for the practice of this invention are continuous processes which provide for the continuous supply of reactants to the reaction zone of the reactor and the removal of products from the reaction zone of the reactor, thereby providing a steady-state environment on the macro scale in the reaction zone of the reactor. Products are readily recovered by exposure to reduced pressure and optionally elevated temperatures (devolatilization) according to known techniques. The process readily removes any residual silane or hydrocarbylsilane branching agent, as well as inert diluents and unreacted monomers which may be recycled to the reactor if desired.

Typically, the fluidized bed of the gas phase process is operated at temperatures greater than 50°C, preferably from 60°C to 110°C, more preferably from 70°C to 110°C.

A number of patents and patent applications describe gas phase processes which are adaptable for use in the process of this invention, particularly, US-A-4,588,790; US-A-4,543,399; US-A-5,352,749; US-A-5,436,304; US-A-5,405,922; US-A-5,462,999; US-A-5,461,123; US-A-5,453,471; US-A-5,032,562; US-A-5,028,670; US-A-5,473,028; US-A-5,106,804; US-A-5,556,238; US-A-5,541,270; US-A-5,608,019; US-A-5,616,661; and EP-A-659,773; EP-A-692,500; EP-A-780,404; EP-A-697,420; EP-A-628,343; EP-A-593,083; EP-A-676,421; EP-A-683,176; EP-A-699,212; EP-A-699,213; EP-A-721,798; EP-A-728;150; EP-A-728,151; EP-A-728,771; EP-A-728,772; EP-A-735,058; and WO-94/29032, WO-94/25497, WO-94/25495, WO-94/28032, WO-95/13305, WO-94/26793, WO-95/07942, WO-97/25355, WO-93/11171, WO-95/13305, and WO-95/13306.

For the preferred polyolefin polymer compositions utilized in this invention, the long chain branch is longer than the short chain branch that results from the incorporation of one or more $\alpha$-olefin comonomers or alkenylsilanes into the polymer backbone. The empirical effect of the presence of long chain branching in the polymers of this invention is

manifested as enhanced rheological properties which are indicated by higher flow activation energies, greater $I_{21}/I_2$ than expected from the other structural properties of the compositions, enhanced melt rheological properties, and improved retention of physical properties upon repeated exposure to melting and shearing conditions.

The silane conversion processes utilized in the invention include hydrolysis or alcoholysis under basic or acidic conditions, or oxidation of OSi-H bonds to produce OSi-$OR^4$ groups; or aminolysis of OSi-H to produce OSi-$NR^4_2$, wherein $R^4$ is H or $C_{1-10}$ hydrocarbyl. Also included are processes wherein incomplete or partial hydrolysis, alcoholysis, aminolysis or oxidation of such bonds is conducted. Optionally, all of the forgoing procedures may be followed by one or more condensation-, coupling-, ionic coupling-, or ionic coupling with neutralization- reactions. Alternatively, a suitable conversion process includes direct reaction of the silane proton with a reactive compound or substituent such as a base.

Such conversion processes utilize conventional chemical reagents and processing conditions and are preferably conducted under solution or melt phase conditions. As an example, the hydrolysis of silane functionality may be readily accomplished by reaction with water or an alcohol, or glycol, optionally under conditions to subsequently remove by-products of the reaction, if desired. If only a portion of silane groups are hydrolyzed, coupling of the remaining silane groups by means of a condensation may be employed to give polymers with various degree of interchain coupling. The resulting materials possess greater sensitivity to shear and higher melt strength. Higher levels of silane content can produce products approaching those of fully cross-linked or vulcanized materials. Coupled products possessing unique combinations of properties can be obtained by coupling of interpolymers containing dissimilar silane functionality. Such coupled interpolymer products possess unique properties that tend to be intermediate between those of the individual interpolymers or chemically similar non-silane containing polymers, and may be used as compatibilizers in forming blends of two or more different silane containing interpolymers, blends of similar or dissimilar, non-silane, containing polymers, or blends of both types of polymers. The forgoing coupled polymers and blends thereof may be usefully employed to form articles such as sheets, films and fibers for use in sealing or wrapping applications, gaskets, tilters and fabrics, that have improved solvent resistance, creep resistance, or other physical properties.

Oxidation of the silane group may involve reaction with oxygen, ozone, peroxide or other suitable oxidant. The oxidation reaction can be accelerated using a radical initiator such as peroxides or azobisiosbutyronitrile. The resulting ≡Si-OH groups can be condensed, or otherwise used in the further reactions described herein.

Condensation of either hydrolyzed or oxidized silane functionality, or the ≡SiH groups with hydroxyl functionality of other reagents may be employed to form additional conversion products. In particular, condensation with surface hydroxyl or other reactive groups of solid, especially particulated or fibrous materials, can result in improved compatability between components of composite materials prepared therefrom. Thus, blends or composites containing fillers or reinforcing aids comprising glass, silica, mica, natural or artificial fibers, clays, zeolites, talc, titanocenes, titanium dioxide, carbon, and other materials, having the surface hydroxyl moieties thereof condensed with the forgoing silane containing interpolymers, possess improved adhesion properties, enhanced coupling between fillers and/or tensile enhancing agents and the polymer, and provide articles and objects having enhanced paint, ink and dye acceptance.

Hydrolysis or partial hydrolysis and neutralization under basic conditions gives converted interpolymer products having ≡Si-$OR^6$ groups, wherein $R^6$ is a metal cation, especially a monovalent or divalent metal cation, such as $Na^+$, $Zn^{2+}$ or $Ca^{2+}$. For polyvalent cations, charge balance may be maintained by use of discrete anionic ligand groups or sharing of the cation among multiple silicon containing groups. Such ionomeric, interpolymers possess many of the desirable properties of coupled interpolymers, yet remain more easily melt processable. Moreover, such converted interpolymers possess improved toughness, compared to the unconverted interpolymers. The property benefits are especially pronounced if the interpolymer contains on average, more than one silane group per polymer chain.

Such ionomeric interpolymers having a crystallinity of less than 20 percent are especially useful as thermoplastic elastomers. The OSi-$OR^6$ groups, whether present in an amount that on average is less than or greater than one per chain, also confer benefits for melt processing, giving polymers having higher shear rate sensitivity and enhanced melt strength (rheology modified polymers) or having enhanced sub-melt processing such as improved sag resistance for thermoforming. Under appropriate conditions, such ionomeric interpolymers having the foregoing OSi-$OR^6$ groups can be further condensed to produce further beneficial polymer types.

Condensation or other reaction of the silane functionalized interpolymers with a poly functional linker compound containing two or more groups independently selected from alcohol, amine, epoxy, peroxide, carboxylic acid, phosphoric acid, boric acid, metal salt derivatives of carboxylic acids, phosphoric acid or boric acid, isocyanate, nitrile, amide, ketone, ester, diazonium (or other carbene forming reagent), alkene, alkyne, and alpha-omega diene groups are also desirably performed. The linker compounds can be large or small and preferably contain from 2 to 100,000 atoms not counting hydrogen. Depending on the number of OSiH groups per chain and the kind of polyfunctional linker employed, rheology modified polymers, surface modified polymers, crosslinked polymers, and grafted polymers can be obtained. Catalysts such as acids, bases, and transition metals can be used to accelerate the condensation or other reaction.

By way of further explication, the reaction of a polymer sample averaging less than 1 OSiH per chain can react with diethylene glycol, glycerine, or a diamine to result in the formation of a rheology modified polymers or surface modified polymers. The same reaction with a polymer having more on average than one SiH functionality per chain may

be used to form polymers having varying degrees of coupling up to and including cross-linked, thermosetting polymers. The reaction of a high crystalline polyolefin polymer containing such OSiH functionality with a polyethyleneglycol or a polyethyleneglycol amine results in the formation of a grafted polymer containing hard polyolefin segments linked by soft polyethyleneether or polyethylene- amine segments. Conversely, the reaction of an elastomeric interpolymer containing OSiH groups, or the hydrolyzed derivatives thereof, results in formation of polymers that are extremely effective impact modifiers for polar group containing engineering thermoplastics such as polyesters, polyamides and polyimides. The OSiH groups can react with functionality present in such engineering thermoplastics (for example, amine, hydroxyl, and other functionality) to chemically bond the elastomeric interpolymer to the engineering thermoplastic. Such products are useful in compatibilizing blends of polyolefins with polar engineering thermoplastics.

Any additives that accelerate the above reactions, especially the hydrolysis or condensation reactions, can be used in this invention, if desired. Examples of known suitable classes of accelerating additives are organic or inorganic Lewis bases, organometallic compounds wherein the metal is a metal selected from Groups 1-13 of the Periodic Table of the Elements containing up to 100 carbon atoms, inorganic ammonium salts or salts of metals of Groups 1 or 2 of the Periodic Table of the Elements, carboxylic acids and their ammonium or Group 1 or 2 metal salts, titanates, silicates, aluminosilicates, and magnesioaluminosilicates. Some specific examples of such accelerating additives would be calcium oxide, magnesium oxide, calcium hydroxide, magnesium hydroxide, aluminum hydroxide, calcium carbonate, magnesium carbonate, sodium carbonate, potassium carbonate, magnesium aluminum hydroxy carbonate hydrate, sodium bicarbonate, magnesium stearate, zinc stearate, calcium stearate, sodium stearate, titanium tetra(2-ethylhexyl)alkoxides, precipitated silicas, hydrotalcites, magadiites, laponites, hectorites, sodium silicates, sodium aluminosilicates, ammonium silicates, and ammonium aluminosilicates. Accelerating compounds that contain hydroxide groups or hydrated or physisorbed water are particularly useful in this invention. Because stronger bonds between the hydroxyl oxygen and the additive occur in hydrates, those are most preferred.

Having described the invention, the following Examples are provided as further illustration and are not to be construed as limiting. The skilled artisan will appreciate that the invention disclosed herein may be practiced in the absence of any component which has not been specifically disclosed. Unless stated to the contrary, all parts and percentages are based on weight.

EXAMPLE 1 (Interpolymer preparation)

Monomer and solvent were purified by passing through activated alumina and supported copper catalyst (Q5 reactant, available from Engelhardt Corporation), and otherwise handled using standard inert atmosphere techniques. Manipulations of catalyst and cocatalyst (both as 0.0050 M solutions in toluene) were carried out in an inert atmosphere glove box.

Solvent (Isopar E® available from Exxon Chemicals Inc.) and octene-1 were purified by sparging with purified nitrogen followed by passage through columns containing A2 alumina and Q5 reactant at 50 psig (350 kPa) using a purified nitrogen pad. Allyldimethylsilane was purified by sparging with nitrogen and passage through a column containing A2 alumina. All transfers of solvents and solutions described below were accomplished using a gaseous pad of dry, purified nitrogen or argon. Gaseous feeds to the reactor were purified by passage through columns of A-204 alumina and Q5 reactant. Alumina was previously activated at 375°C with nitrogen and Q5 reactant was activated at 200°C with 5 mole percent hydrogen in nitrogen.

The batch reactor polymerization was conducted in a two liter Parr reactor with an electrical heating jacket, internal serpentine coil for cooling, and a bottom drain valve. Pressures, temperatures and block valves were computer monitored and controlled. Solvent (876 g) and octene-1 (31 g) were measured in a solvent shot tank fitted with a weigh cell. Allyldimethylsilane was transferred to the solvent tank from the glove box. This solution was then added to the reactor from the solvent shot tank. The contents of the reactor were stirred at 1200 rpm. Hydrogen was added by differential expansion ($\Delta$ 10 psi, 70 kPa) from a 75 ml shot tank initially at 300 psig (2Mpa). The reactor was heated to the desired run temperature, 140°C, under 450 psig (3.5 MPa) of ethylene pressure. The catalyst ((t-butylamido)dimethyl ($\eta^5$-tetramethylcyclopentadienyl)silanetitanium(II) 1,3-pentadiene, 1.7 $\mu$moles) and tris(pentafluorophenyl)borane cocatalyst (5.1 $\mu$moles) were combined in the glove box and transferred to the catalyst shot tank through 1/16 in (0.16 cm) tubing using toluene to aid in the transfer. The catalyst tank was then pressurized to 700 psig (4.8 MPa) using nitrogen. After the contents of the reactor had stabilized at the desired run temperature of 140°C, the catalyst was injected into the reactor via a dip tube. The temperature was maintained by allowing cold ethylene glycol solution to pass through the internal cooling coils. The reaction was allowed to proceed for 15 minutes with ethylene provided on demand. The contents of the reactor were then expelled into a 4 L, nitrogen purged vessel and quenched with isopropyl alcohol. Volatile materials were removed from the polymers in a vacuum oven up to 140°C overnight and cooled to at least 50°C prior to removal from the oven. The polymer yield was 103 g. Polymer density was 0.916 g/mL and I2 was 4.2.

A sample of the polymer was melt blended at 140°C for 5 minutes. Another sample was combined with hydrated calcium stearate (CaSt, 0.2 wt percent) and melt blended at 140°C for 5 minutes. A further portion of this sample was

then reblended at 200°C for an additional 5 minutes. It is believed, the presence of silane branching in the polymer is indicated by increase in $V_{0.1}/V_{100}$ after repeated melt blending in this manner. Results are contained in Table 1.

Table 1

| Sample | Post Treatment | $V_{0.1}$* | $V_{100}$** | $V_{0.1}/V_{100}$ |
|---|---|---|---|---|
| A | none | 0.3 | 0.1 | 4 |
| B | A blended 5 minutes at 140 °C | 0.7 | 0.1 | 7 |
| C | A + CaSt blended 5 minutes at 140 °C | 1.5 | 0.1 | 15 |
| D | C blended 5 minutes at 200 °C | 40 | 0.2 | 200 |
| * viscosity at 0.1 radians/sec (x $10^{-5}$)<br>** viscosity at 100 radian/sec (x $10^{-5}$) | | | | |

EXAMPLE 2 (Interpolymer preparation)

Copolymers of propylene and allyldimethylsilane (ADMS), as well as polypropylene homopolymer controls were prepared by a slurry polymerization and a solution polymerization process substantially according to Example 1.

Slurry polymerization conditions (A0-A4)

A 1.8 liter Mettler reactor was charged with 500 g propylene, and allyldimethylsilane via a comonomer transfer line which was subsequently washed three times with 5ml toluene. Hydrogen was added as a molecular weight control agent by differential pressure expansion from a 50 ml addition tank at 40 psi (2153 kPa). The reactor was heated to the prepolymerization temperature of 25 °C. Supported catalyst (dried and triethylaluminum treated silica containing dimethylsilanebis(2-methyl-4-phenylinden-1-yl)zirconium (II) 1,4-diphenyl-1,3-butadiene catalyst and methyldi(octadecyl)ammonium diethylaluminumoxyphenyltris(pentafluorophenyl)borate cocatalyst (approximate molar ratio 1:1) was slurried with 20 mL hexane in the glove box, taken to the reactor cubicle and injected into the catalyst addition tank and shot into the reactor.

The supported catalyst was prepared in the following manner. Silica (3.00 g, SMR 49-2814, available from Grace Davison company, dried and pretreated with a stoichiometric quantity of triethylaluminum (TEA) to remove hydroxyl groups, was added to a 4 oz bottle. 3.3 mL Of a toluene solution of methyldi(octadecyl)ammonium diethylaluminum oxyphenyltris(pentafluoro-phenyl)borate in toluene (total solvent = 1.1 ml/g silica, 180 μmole of boron) was added and the mixture was shaken by hand until clumping was gone (about 2 minutes) then placed on a mechanical shaker for 10 more minutes. Mixed hexanes (24 mL) were added and the bottle was shaken for about 15 minutes. Dimethylsilanebis (2-methyl-4-phenylinden-1-yl)zirconium 1,4-diphenyl-1,3-butadiene catalyst (0.1132 g total Zr) in 7 mL toluene was then added. Approximately 20 mL of mixed hexanes were added and the resulting slurry was shaken for about 3 h. The resulting bluish product was filtered on a medium frit, washed 2x with 30 ml of hexanes and dried under vacuum overnight.

With the catalyst shot tank vented and under low pressure nitrogen purge from a cylinder supply and argon purge from the glove box, 20 mL of n-hexanes were sent to the catalyst shot tank from the glove box and the argon flow was maintained. The syringe containing 20mL of slurry was taken out of the glove box and into the reactor cubicle. A manual valve at the top of the catalyst shot tank was opened and the slurry injected into the catalyst shot tank. The 1/16 inch (1.6 mm) stainless steel (ss) line through which the argon flows into the shot tank extends to approximately an inch (2.5 cm) off the bottom of the 0.050 L ss shot tank preventing the slurry particles from settling out of suspension. The argon flow was stopped, the shot tank was filled with nitrogen and the slurry was pressured into the reactor.

After 10 minutes reaction, the reactor temperature was increased to 60 °C and maintained at that temperature for the indicated polymerization time. The resulting polymer solution was removed from the reactor and dried in a vacuum oven under gradually increasing temperature and gradually decreasing pressure. The polymer was held at a final temperature of 140° C and a final pressure of 100 torr (13 kPa) for 15 hours. No anti-oxidant was used. Solution Polymerization conditions (B0-B4)

A 1.8 liter Mettler reactor was charged with 600 g Isopar-E™ mixed alkanes solvent (available from Exxon Chemicals Inc.), 150 g propylene, and allyldimethylsilane via a comonomer transfer line which was subsequently washed three times with 5ml toluene. Hydrogen was added as a molecular weight control agent by differential pressure expansion from a 50 ml addition tank at 25 psi (2153 kPa). The reactor was heated to the polymerization temperature of 90 °C. The same solvent was used to prepare solutions of dimethylsilanebis(2-methyl-4-phenylinden-1-yl)zirconium (II) 1,4-diphenyl-1,3-butadiene catalyst and methyldi(octadecyl)ammonium 1,3-bis(tris(pentafluorophenyl)alumane)-2-undecylimidazolide cocatalyst (prepared according to the teachings of USSN 09/251,664 filed 2/17/99, WO 99/42467, published 26 August, 1999) which were premixed in a drybox for approximately one minute in an approximate molar ratio of 1:1, then transferred to a catalyst addition tank and injected into the reactor. After the indicated polymerization time, the resulting polymer solution was removed from the reactor and dried in a vacuum oven under gradually increasing temperature and gradually decreasing pressure. The polymer was held at a final temperature of 140° C and a final pressure of 100 torr (13 kPa) for 15 hours. No anti-oxidant was added to the polymer.

The level of ADMS incorporated into the polymers was estimated by the following procedure. Infrared spectra were obtained from compression molded films with thicknesses in the range of 0.25-0.50 mm. The peak absorbance at 2130 $cm^{-1}$, which is assigned to $R_3Si$-H, was then used to calculate the ADMS levels in the polymers, using Beer's law with an extinction coefficient of 2.56 $(mm * mole\ percent)^{-1}$. Molecular weights were measured by size exclusion chromatography. The chromatography columns were calibrated with polystyrene standards, and the universal calibration relationship together with the Mark-Houwink coefficients for polystyrene and polypropylene were then used to calculate molecular weights on a polypropylene basis. Results are contained in Table 2.

Table 2

| Code | Run time (min) | μmoles catalyst | mL ADMS in feed | Yield (g) | [ADMS] in polymer mole percent | Mw (kg/mol) |
|---|---|---|---|---|---|---|
| A0 (control) | 10 | 2.50 | 0 | 28 | 0 | 232 |
| A1 | 6.8 | 2.00 | 0.5 | 70 | 0.133 | 163 |
| A2 | 8.3 | 2.50 | 1.0 | 56 | 0.144 | 205 |
| A3 | 7.6 | 2.37 | 2.0 | 52 | 0.165 | 183 |
| A4 | 6.7 | 2.37 | 4.0 | 54 | 0.245 | 209 |
| B0 (control) | 60 | 1.7 | 0 | 176 | 0 | 103 |
| B1 | 45 | 1.7 | 0.5 | 176 | 0.30 | 85 |
| B2 | 45 | 1.7 | 1.0 | 125 | 0.38 | 101 |
| B3 | 45 | 1.7 | 2.0 | 108 | 0.76 | 90 |
| B4 | 45 | 1.7 | 4.0 | 176 | 1.56 | 78 |

The above polymers were subjected to various melt treatments using a Haake Rheocord 90 torque rheometer with a Haake Rheomix Type 600 internal mixer head with sigma-type blades and internal volume of 25 $cm^3$ (Fisons Instruments, Valencia, California). With this size mixing head, the weight of polymer required to fill the mixing head at melt temperature is 18-20 grams. The melt treatment procedure consisted of the following steps. First, the mixer head was heated to a temperature of 190°C and the rotor speed was set to 75 rpm. Next, half of the total charge of polymer was added to the instrument and allowed to melt. Third, 5000 ppm by weight of a stabilizer/antioxidant package that is a 1:1 mixture by weight of tris(2,4-di-(tert)-butylphenyl) phosphite and tetrakis[methylene(3,5-di-(tert)-butyl-4-hydroxyhydrocinnamate)] methane (Irganox™ B225, available from Ciba Specialty Chemicals Corporation) was added. Fourth, after allowing 30-60 sec for the stabilizer/antioxidant package to mix with the polymer, 2000 ppm by weight of an additive chosen either to facilitate or accelerate or participate in further chemical reactions of the inventive polymers was added to some of the polymer samples. Fifth, the remainder of the polymer charge was added. Sixth, the rotor speed was increased to 150 rpm and mixing was continued for an additional twenty minutes. At the completion of each run, the mixer head was opened to remove the polymer for subsequent analyses.

Molecular weights of the melt treated polymers were measured by size exclusion chromatography as described above. The complex dynamic shear viscosity (Vsh) of melt treated polymers and corresponding controls as a function of angular frequency (rate) was measured at 200 °C and a rate of 0.1 radians per second using a Rheometrics Model RDS-IIE dynamic mechanical spectrometer equipped with a force rebalance transducer, environmental chamber, and parallel plate test fixtures (Rheometrics, Inc., Piscataway, New Jersey). The measurements were made on compression molded samples according to the technique described in, J. D. Ferry, Viscoelastic Properties of Polymers, 3rd Edition, John Wiley and Sons, New York, 1980. Results are contained in Table 3, wherein comparative, non-inventive samples are denoted by the prefix "C".

Table 3

| sample | Melt treated? | Polymer | Additive* | Mw (kg/mol) | Vsh (Poise) |
|---|---|---|---|---|---|
| C1 | no | A0 | none | 232 | 9297 |
| C2 | yes | A0 | none | 198 | 6872 |
| C3 | yes | A0 | calcium stearate | 203 | 8372 |
| C4 | yes | A0 | ammonium silicate (amorphous) | 193 | 7117 |
| C5 | yes | A0 | $Mg_4.5Al_2(OH)_{13}CO_3 \cdot 3.5\ H_2O$ | 176 | 5266 |
| C6 | no | A3 | none | 183 | 4115 |
| 1 | yes | A3 | magnesium oxide | 182 | 5308 |
| 2 | yes | A3 | synthetic hectorite | 186 | 6444 |
| 3 | yes | A3 | $Mg_4.5Al_2(OH)_{13}CO_3 \cdot 3.5\ H_2O$ | 190 | 5776 |
| 4 | yes | A3 | calcium stearate | 162 | 3588 |
| C7 | no | A4 | none | 209 | 6339 |
| 5 | yes | A4 | none | 192 | 6541 |
| 6 | yes | A4 | sodium silicate (amorphous) | 196 | 7402 |
| 7 | yes | A4 | ammonium silicate (amorphous) | -** | 6369 |
| C8 | no | B1 | none | 85 | 282 |
| 8 | yes | B1 | ammonium silicate (amorphous) | 82 | 571 |
| C9 | no | B2 | none | 101 | 550 |
| 9 | yes | B2 | sodium silicate (amorphous) | 101 | 869 |
| C10 | no | B3 | none | 90 | 390 |
| 10 | yes | B3 | calcium stearate | 91 | 805 |

* All additives had some physically adsorbed water.
** not determined

Comparative samples C2-C5 illustrate the effects of melt treatment on polymers that contain no ≡Si-H groups. In comparison to the untreated polymer (C1), melt treatment results in decreased molecular weight and decreased melt viscosity. This is believed to be the result of thermo-oxidative chain scission, which is ameliorated but not eliminated by addition of a stabilizer/antioxidant package during melt treatment.

Samples 1-10 illustrate the effects of melt treatment on the ≡Si-H containing copolymers of this invention. By comparison of Samples 1-4 with C6; Samples 5-7 with C7; Sample 8 with C8; Sample 9 with C9; Sample 10 with C10; and all inventive samples with the comparatives C2-C5, it may be seen that the present polymers show relatively little change in molecular weight upon melt treatment. In addition, the inventive polymers (with the exception of sample 4) show a relative increase in melt viscosity after melt treatment compared to the controls.

The relatively constant molecular weight and increased viscosity of samples 1-3 and 5-10 upon melt treatment are especially significant if considered in light of a "truer" baseline than the original untreated polymers, namely, the baseline that is provided by the melt treatment results for C2-C5. That is, the molecular weights and viscosities for samples 1-3 and 5-10 should be considered relative to the lower values that are seen for melt treated polymers that do not contain ≡Si-H groups. These results demonstrate that the polymers of the invention provide increased viscosity and correspondingly increased melt strength compared to unmodified polymers. Increased melt strength beneficially allows the manufacture of film and foam products from polymers that normally lack sufficient melt strength properties for such manufacturing techniques. The increase in viscosity at essentially constant molecular weight for the melt treated silane functional copolymers of the above examples is indicative of formation of branched or effectively branched polymers by one or more types of chemical transformations.

Upon melt treatment it is further observed that the polymers of this invention retain their melt rheological properties for a longer time. The silane functional copolymers of the invention accordingly possess improved molecular weight, viscosity, and melt strength retention after initial and repeated melt processing. This improved retention of

molecular weight and melt rheological properties is beneficial for melt fabrication processes. This improvement is particularly beneficial for homopolymers or copolymers of higher α-olefins, such as polypropylene, which typically tend to show reductions in molecular weight, viscosity, and melt strength upon melt processing. For example, this benefit allows for higher levels of incorporation of recycled or reground polymer into a product without adverse effects on fabrication behavior.

This improved retention of molecular weight and viscosity is observed for melt treated silane functional copolymers even without the use of an additive designed to facilitate or accelerate or participate in further chemical reactions, as illustrated by the following examples. A control homopolymer and several silane functional copolymers were compression molded into disks, then the change in complex dynamic shear viscosity, Vsh at a rate of 1 radian/sec and temperature of 200°C, was measured as a function of time using a Rheometrics Model RDS-IIE dynamic mechanical spectrometer with parallel plate fixtures. Because of different molecular weights and viscosities of the starting resins, for meaningful intercomparison it is useful to calculate the relative viscosity ratio R, defined as the ratio of Vsh at time t to Vsh at the start of the test, R = Vsh(t)/Vsh(0). For the examples below, R is observed to decrease approximately linearly with time, starting from an initial value of R = 1 for all resins. The magnitudes of the slopes S ($S = \Delta R/\Delta t$) of these lines, fit to data for the first 1000 seconds of the test, indicate the rates at which Vsh, appropriately normalized to account for differences in starting viscosity, decreases versus time. It is observed that the silane functional copolymers of the invention show a less rapid decrease in R than the control polymer (that is, they possess a smaller S corresponding to less steep slope), and further that the decrease in R is less rapid the higher the silane functionality of the copolymer. Results are contained in Table 4.

Table 4

| Sample | Polymer | $-1 \times 10^5 \times S$ (1/sec) |
|---|---|---|
| C11 | A0 | 7.2 |
| 11 | A1 | 5.5 |
| 12 | A2 | 6.0 |
| 13 | A3 | 4.3 |
| 14 | A4 | 3.5 |

## Claims

**1.** A process for preparing a derivative of a silane functionalized interpolymer comprising

(i) preparing an interpolymer by contacting under addition polymerization conditions one or more addition polymerizable monomers lacking silane functionality and one or more alkenylsilane compounds corresponding to the formula:

$$A_nJ_jSiH_{4-(n+j)}$$

wherein:

J is $C_{1-40}$ hydrocarbyl,
A is a $C_{2-20}$ alkenyl group,
n is 1 or 2, and
j is 0, 1 or 2;

with a catalyst.composition comprising a transition metal complex corresponding to the formula:

$$K'_kMZ'_mL_lX_p,$$

or a dimer thereof
wherein:

K' is an anionic group containing delocalized π-electrons through which K' is bound to M, said K' group containing up to 50 atoms not counting hydrogen atoms, optionally two K' groups are joined together forming

a bridged structure, and further optionally one K' is bound to Z';
M is a metal of Group 4 of the Periodic Table of the Elements in the +2, +3 or +4 formal oxidation state;
Z' is an optional, divalent substituent of up to 50 non-hydrogen atoms that together with K' forms a metallocycle with M;
L is an optional neutral ligand having up to 20 non-hydrogen atoms;
X each occurrence is a monovalent, anionic moiety having up to 40 non-hydrogen atoms, optionally, two X groups may be covalently bound together forming a divalent dianionic moiety having both valences bound to M, or, optionally two X groups may be covalently bound together to form a neutral, conjugated or non-conjugated diene that is bound to M by means of delocalized $\pi$-electrons (whereupon M is in the +2 oxidation state), or further optionally one or more X and one or more L groups may be bonded together thereby forming a moiety that is both covalently bound to M and coordinated thereto by means of Lewis base functionality;
k is 1 or 2; m is 0 or 1; I is a number from 0 to 3; p is an integer from 0 to 3; and
the sum, k+m+p, is equal to the formal oxidation state of M, except when two X groups together form a neutral conjugated or non-conjugated diene that is bound to M via delocalized $\pi$-electrons, in which case the sum k+m is equal to the formal oxidation state of M,

said interpolymer comprising from 0.01 to 100 long chain branches per 10,000 carbons, having randomly distributed silane functionality and containing from 0.01 to 1000 silane groups derived from the alkenylsilane compound per 10,000 carbons and
(ii) subsequently subjecting the interpolymer to a silane conversion process selected from:

a) coupling of one or more chains of such interpolymers,
b) hydrolysis to give Si-$OR^4$ groups, where $R^4$ is H or $C_{1-10}$ hydrocarbyl;
c) hydrolysis and neutralization to give ionomers having Si-$OR^6$ groups, where $R^6$ is a metal cation; or
d) condensation or other reaction with an inorganic substrate having surface hydroxyl groups or with a polyfunctional linker compound containing two or more alcohol, amine, epoxy, peroxide, carboxyl, isocyanate, nitrile, amide, ketone, ester, or diazonium groups or metal salt derivatives of carboxy groups.

**2.** A process according to Claim 1, wherein the randomly distributed silane functionality is equally distributed among different polymer chains.

**3.** A process according to Claim 1 or Claim 2, wherein the silane randomness meets the requirement of: $0.1 < r_{12}*r_{21} < 10.0$, wherein:

$$r_{12}=k_{11}/k_{12},$$

$$r_{21}=k_{22}/k_{21},$$

and
$k_{ij}$ is the rate constant for the most recently incorporated monomer i, with incoming monomer i or j during catalysis.

**4.** A process according to Claim 3, wherein the silane randomness meets the requirement of $0.5 < r_{12}*r_{21} < 2$.

**5.** A process according to Claim 4, wherein the silane randomness meets the requirement of $0.75 < r_{12}*r_{21} < 1.5$.

**6.** A process according to any one of the preceding claims, wherein the alkenylsilane compound(s) correspond to the formula:

$AJ_2SiH$

wherein:

J is $C_{1-40}$ hydrocarbyl, and
A is a $C_{2-20}$ alkenyl group.

7. A process according to any one of the preceding claims, wherein alkenylsilane is selected from hexenylsilane, allylsilane, vinylsilane, octenylsilane, hexenyldimethylsilane, octenyldimethylsilane, vinyldimethylsilane, vinyldiethylsilane, vinyidi(n-butyl)silane, vinylmethyloctadecylsilane, vinyldiphenylsilane, vinyldibenzylsilane, allyldimethylsilane, allyldiethylsilane, allyldi(n-butyl)silane, allylmethyloctadecylsilane, allyldiphenylsilane, bishexenylsilane, and allyldibenzylsilane and mixtures thereof.

8. A process according to any one of the preceding claims, wherein the addition polymerizable monomer is an olefins or mixture of olefins and diolefins.

9. A process according to Claim 8, wherein the addition polymerizable monomer is a $C_{2-20}$ $\alpha$-olefin or mixture thereof.

10. A process according to Claim 9, wherein the addition polymerizable monomer is selected from ethylene, propylene, and mixtures of ethylene with propylene, 1-butene, 1-hexene or 1-octene.

11. A process according to any one of the preceding claims, wherein the interpolymer contains from 0.05 to 50 silane groups derived from the alkenylsilane compound per 10,000 carbons.

12. A process according to any one of the preceding claims, wherein an additive containing hydroxyl groups, a hydrated compound or a compound containing physically absorbed water is reacted with the silane functionalized interpolymer.

13. A process according to any one of the preceding claims, wherein the transition metal complex has two K' groups linked by a bridging group corresponding to the formula:

$$(ER'_2)_x$$

wherein:

E is silicon, germanium, tin, or carbon,
R' independently each occurrence is hydrogen or a group selected from silyl, hydrocarbyl, hydrocarbyloxy and combinations thereof, said R' having up to 30 carbon or silicon atoms, and
x is 1 to 8.

14. A process according to Claim 13, wherein the transition metal complex corresponds to the formula:

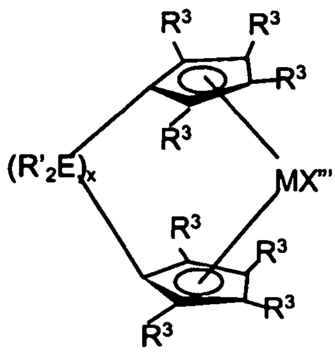
(IV)

wherein:

M is titanium, zirconium or hafnium in the +2 formal oxidation state;
$R^3$ in each occurrence independently is selected from hydrocarbyl, silyl, germyl, halo, halohydrocarbyl, hydrocarbyloxy, hydrocarbylsiloxy, N,N-di(hydrocarbylsilyl)amino, N-hydrocarbyl-N-silylamino, N,N-di(hydrocarbyl)amino, hydrocarbyleneamino, di(hydrocarbyl)phosphino, hydrocarbylsulfido; or hydrocarbyloxy-substituted hydrocarbyl,, said $R^3$ having up to 20 non-hydrogen atoms, or adjacent $R^3$ groups together form a divalent derivative thereby forming a fused ring system;
X''' independently each occurrence is a neutral, conjugated diene, or a silyl, germyl, or halohydrocarbyl substituted derivative thereof, having up to 40 atoms other than hydrogen;

E is silicon or carbon;
R' independently each occurrence is hydrogen or a group selected from silyl, hydrocarbyl, hydrocarbyloxy and combinations thereof, said R' having up to 30 carbon or silicon atoms; and
x is 1 to 8.

**15.** A process according to any one of Claims 1 to 12, wherein the transition metal complex corresponds to the formula:

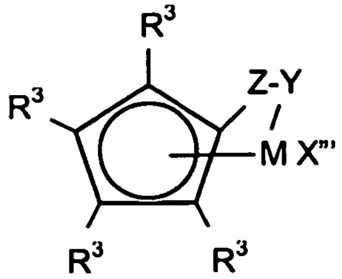

wherein:

M is titanium or zirconium in the +2 formal oxidation state;
$R^3$ in each occurrence independently is selected from hydrocarbyl, silyl, germyl, halo, halohydrocarbyl, hydrocarbyloxy, hydrocarbylsiloxy, N,N-di(hydrocarbylsilyl)amino, N-hydrocarbyl-N-silylamino, N,N-di(hydrocarbyl)amino, hydrocarbyleneamino, di(hydrocarbyl)phosphino, hydrocarbylsulfido; or hydrocarbyloxy-substituted hydrocarbyl, said $R^3$ having up to 20 non-hydrogen atoms, or adjacent $R^3$ groups together form a divalent derivative thereby forming a fused ring system;
each X is a halo, hydrocarbyl, hydrocarbyloxy or silyl group, said group having up to 20 non-hydrogen atoms, or two X groups together form a divalent derivative thereof;
X''' is a neutral, conjugated diene, or a silyl, germyl, or halohydrocarbyl substituted derivative thereof, having up to 40 atoms other than hydrogen;
Y is -O-, -S-, -NR'-, or -PR'-; and
Z is $SiR'_2$, $CR'_2$, $SiR'_2SiR'_2$, $CR'_2CR'_2$, CR'=CR', $CR'_2SiR'_2$, or $GeR'_2$, wherein R' independently each occurrence is hydrogen or a group selected from silyl, hydrocarbyl, hydrocarbyloxy and combinations thereof, said R' having up to 30 carbon or silicon atoms.

**16.** A derivative of a silane functionalized interpolymer obtainable by a process as claimed in any one of the preceding claims.

**Patentansprüche**

**1.** Verfahren zur Herstellung eines Derivats eines silanfunktionalisierten Interpolymers, umfassend

(i) Herstellen eines Interpolymers durch In-Kontakt-Bringen unter Additionspolymerisationsbedingungen eines oder mehrerer additionspolymerisierbarer Monomere, die keine Silanfunktionalität aufweisen, und einer oder mehrerer Alkenylsilanverbindungen entsprechend der Formel:

$$A_nJ_jSiH_{4-(n+j)}$$

worin:

J gleich $C_{1-40}$-Hydrocarbyl ist,
A eine $C_{2-20}$-Alkenylgruppe ist,
n gleich 1 oder 2 ist und
j gleich 0, 1 oder 2 ist,

mit einer Katalysatorzusammensetzung, die einen

Übergangsmetallkomplex entsprechend der Formel:

$$K'_k MZ'_m L_l X_p$$

oder einen Dimer davon enthält, worin:

K' eine anionische Gruppe ist, die delokalisierte π-Elektronen enthält, über die K' an M gebunden ist, wobei die K'-Gruppe bis zu 50 Atome umfasst, wobei Wasserstoffatome nicht mitgezählt werden, optional zwei K'-Gruppen miteinander verknüpft sind und eine verbrückte Struktur bilden und weiterhin optional ein K' an Z' gebunden ist,
M ein Metall der Gruppe 4 des Periodensystems der Elemente in der formalen Oxidationsstufe von +2, +3 oder +4 vorliegt,
Z' ein optionaler zweibindiger Substituent von bis zu 50 Nichtwasserstoffatomen ist, der zusammen mit K' einen Metallocyclus mit M bildet,
L ein optionaler neutraler Ligand mit bis zu 20 Nichtwasserstoffatomen ist,
X bei jedem Auftreten eine einbindige anionische Einheit mit bis zu 40 Nichtwasserstoffatomen ist, wobei optional zwei X-Gruppen kovalent aneinander gebunden sein können und eine zweibindige dianionische Einheit bilden, deren beide Valenzen an M gebunden sind, oder optional zwei X-Gruppen kovalent aneinander gebunden sein können, um ein neutrales konjugiertes oder nichtkonjugiertes Dien zu bilden, das an M mit Hilfe von delokalisierten π-Elektronen gebunden ist (wobei M in der Oxidationsstufe von +2 vorliegt), oder weiterhin optional eine oder mehrere X- und eine oder mehrere L-Gruppen aneinander gebunden sein können, wobei sie eine Einheit bilden, die sowohl kovalent an M gebunden ist, als auch daran mit Hilfe einer Lewis-Base-Funktionalität koordiniert ist,
k gleich 1 oder 2 ist, m gleich 0 oder 1 ist, I eine Zahl von 0 bis 3 ist,
p eine ganze Zahl von 0 bis 3 ist und
die Summe k+m+p der formalen Oxidationsstufe von M entspricht, außer wenn zwei X-Gruppen zusammen ein neutrales konjugiertes oder nichtkonjugiertes Diene bilden, das an M über delokalisierte π-Elektronen gebunden ist, in welchem Falle die Summe k+m der formalen Oxidationsstufe von M entspricht,

wobei das Interpolymer von 0,01 bis 100 langkettige Verzweigungen pro 10.000 Kohlenstoffatome aufweist, statistisch verteilte Silanfunktionalität hat und von 0,01 to 1000 Silangruppen, die aus der Alkenylsilanverbindung stammen, pro 10.000 Kohlenstoffatome enthält, und
(ii) nachfolgend das Aussetzen des Interpolymers einem Silanumwandlungsverfahren, ausgewählt aus:

a) Kupplung einer oder mehrerer Ketten des Interpolymers,
b) Hydrolyse, um Si-$OR^4$-Gruppen zu ergeben, wobei $R^4$ gleich H oder $C_{1-10}$-Hydrocarbyl ist,
c) Hydrolyse und Neutralisation, um Ionomere zu ergeben, die Si-$OR^6$-Gruppen haben, wobei $R^6$ ein Metallkation ist, oder
d) Kondensation oder eine andere Reaktion mit einem anorganischen Substrat, das Hydroxylgruppen an der Oberfläche hat, oder mit einer polyfunktionellen Linkerverbindung, die zwei oder mehr Alkohol-, Amin-, Epoxy-, Peroxid-, Carboxyl-, Isocyanat-, Nitril-, Amid-, Keton-, Ester- oder Diazoniumgruppen oder Metallsalzderivate von Carboxygruppen aufweist.

**2.** Verfahren nach Anspruch 1, wobei die statistisch verteilte Silanfunktionalität gleichmäßig über verschiedene Polymerketten verteilt ist.

**3.** Verfahren nach Anspruch 1 oder Anspruch 2, wobei die statistische Silanverteilung der Anforderung genügt: $0{,}1 < r_{12} * r_{21} < 10{,}0$, wobei:

$$r_{12}=k_{11}/k_{12},$$

$$r_{21}=k_{22}/k_{21}$$

und

$k_{ij}$ die Geschwindigkeitskonstante für das unmittelbar zuvor eingefügte Monomer i ist, wobei Monomer i oder j während der Katalyse neu hinzutritt.

**4.** Verfahren nach Anspruch 3, wobei die statistische Silanverteilung der Anforderung $0{,}5 < r_{12}*r_{21} < 2$ genügt.

**5.** Verfahren nach Anspruch 4, wobei die statistische Silanverteilung der Anforderung $0{,}75 < r_{12}*r_{21} < 1{,}5$ genügt.

**6.** Verfahren nach einem der vorhergehenden Ansprüche, wobei die Alkenylsilanverbindung(en) der Formel entspricht (entsprechen):

$$AJ_2SiH$$

worin:

J gleich $C_{1-40}$-Hydrocarbyl ist und
A eine $C_{2-20}$-Alkenylgruppe ist.

**7.** Verfahren nach einem der vorhergehenden Ansprüche, wobei das Alkenylsilan ausgewählt ist aus Hexenylsilan, Allylsilan, Vinylsilan, Octenylsilan, Hexenyldimethylsilan, Octenyldimethylsilan, Vinyldimethylsilan, Vinyldiethylsilan, Vinyldi(n-butyl)silan, Vinylmethyloctadecylsilan, Vinyldiphenylsilan, Vinyldibenzylsilan, Allyldimethylsilan, Allyldiethylsilan, Allyldi(n-butyl)silan, Allylmethyloctadecylsilan, Allyldiphenylsilan, Bishexenylsilan und Allyldibenzylsilan und Mischungen daraus.

**8.** Verfahren nach einem der vorhergehenden Ansprüche, wobei das additionspolymerisierbare Monomer ein Olefin oder eine Mischung aus Olefinen und Diolefinen ist.

**9.** Verfahren nach Anspruch 8, wobei das additionspolymerisierbare Monomer ein $C_{2-20}$-$\alpha$-Olefin oder eine Mischungen daraus ist.

**10.** Verfahren nach Anspruch 9, wobei das additionspolymerisierbare Monomer ausgewählt ist aus Ethylen, Propylen und Mischungen aus Ethylen mit Propylen, 1-Buten, 1-Hexen oder 1-Octen.

**11.** Verfahren nach einem der vorhergehenden Ansprüche, wobei das Interpolymer 0,05 bis 50 Silangruppen, die aus der Alkenylsilanverbindung stammen, pro 10.000 Kohlenstoffatome enthält.

**12.** Verfahren nach einem der vorhergehenden Ansprüche, wobei ein Additiv, das Hydroxylgruppen enthält, eine hydratisierte Verbindung oder eine Verbindung, die physikalisch absorbiertes Wasser enthält, mit dem silanfunktionalisierten Interpolymer reagieren lassen wird.

**13.** Verfahren nach einem der vorhergehenden Ansprüche, wobei der Übergangsmetallkomplex zwei K'-Gruppen enthält, die über eine verbrückende Gruppe verknüpft sind, die der Formel entspricht:

$$(ER'_2)_x$$

worin:

E gleich Silicium, Germanium, Zinn oder Kohlenstoff ist,
R' unabhängig voneinander bei jedem Auftreten Wasserstoff oder eine Gruppe ist, die ausgewählt ist aus Silyl, Hydrocarbyl, Hydrocarbyloxy und
Kombinationen daraus, wobei R' bis zu 30 Kohlenstoff- oder Siliciumatome hat, und
x gleich 1 bis 8 ist.

**14.** Verfahren nach Anspruch 13, wobei der Übergangsmetallkomplex der Formel entspricht:

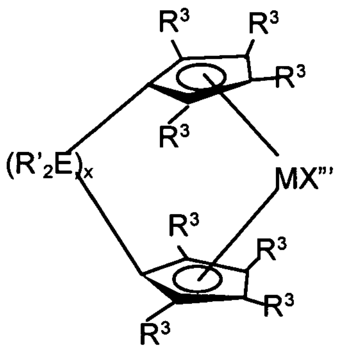

(IV)

worin:

M gleich Titan, Zirconium oder Hafnium in der formalen Oxidationsstufe von +2 vorliegt,
$R^3$ bei jedem Auftreten unabhängig voneinander ausgewählt ist aus Hydrocarbyl, Silyl, Germyl, Halogen, Halogenhydrocarbyl, Hydrocarbyloxy, Hydrocarbylsiloxy, N,N-Di(hydrocarbylsilyl)amino, N-Hydrocarbyl-N-silylamino, N,N-Di(hydrocarbyl)amino, Hydrocarbylenamino, Di(hydrocarbyl)phosphino, Hydrocarbylsulfido oder hydrocarbyloxysubstituiertem Hydrocarbyl, wobei $R^3$ bis zu 20 Nichtwasserstoffatome enthält oder benachbarte $R^3$-Gruppen zusammen ein zweibindiges Derivat bilden, wobei sie ein anelliertes Ringsystem bilden,
X"' unabhängig voneinander bei jedem Auftreten ein neutrales konjugiertes Dien oder ein silyl-, germyl- oder halogenhydrocarbylsubstituiertes Derivat davon mit bis zu 40 Atomen, die andere als Wasserstoff sind, ist,
E gleich Silicium oder Kohlenstoff ist,
R' unabhängig voneinander bei jedem Auftreten Wasserstoff oder eine Gruppe ist, ausgewählt aus Silyl, Hydrocarbyl, Hydrocarbyloxy und Kombinationen daraus, wobei R' bis zu 30 Kohlenstoff- oder Siliciumatome hat, und
x gleich 1 bis 8 ist.

**15.** Verfahren nach einem der Ansprüche 1 bis 12, wobei der Übergangsmetallkomplex der Formel entspricht:

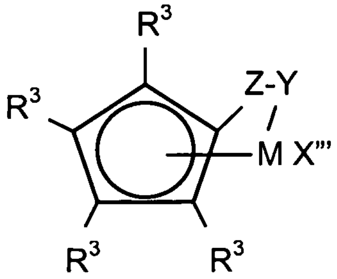

worin:

M gleich Titan oder Zirconium in der formalen Oxidationsstufe von +2 vorliegt,
$R^3$ bei jedem Auftreten unabhängig voneinander ausgewählt ist aus Hydrocarbyl, Silyl, Germyl, Halogen, Halogenhydrocarbyl, Hydrocarbyloxy, Hydrocarbylsiloxy, N,N-Di(hydrocarbylsilyl)amino, N-Hydrocarbyl-N-silylamino, N,N-Di(hydrocarbyl)amino, Hydrocarbylenamino, Di(hydrocarbyl)phosphino, Hydrocarbylsulfido oder hydrocarbyloxysubstituiertem Hydrocarbyl, wobei $R^3$ bis zu 20 Nichtwasserstoffatome enthält oder benachbarte $R^3$-Gruppen zusammen ein zweibindiges Derivat bilden, wobei sie ein anelliertes Ringsystem bilden,
jedes X eine Halogen-, Hydrocarbyl-, Hydrocarbyloxy- oder Silylgruppe ist, wobei diese Gruppe bis zu 20 Nichtwasserstoffatome enthält oder zwei X-Gruppen zusammen ein divalentes Derivat davon bilden,
X"' ein neutrales konjugiertes Dien oder ein silyl-, germyl- oder halogenhydrocarbylsubstituiertes Derivat davon mit bis zu 40 Atomen, die andere als Wasserstoff sind, ist,
Y gleich -O-, -S-, -NR'- oder -PR'- ist und
Z gleich $SiR'_2$, $CR'_2$, $SiR'_2SiR'_2$, $CR'_2CR'_2$, CR'=CR', $CR'_2SiR'_2$ oder $GeR'_2$ ist, wobei R' unabhängig voneinander

bei jedem Auftreten Wasserstoff oder eine Gruppe ist, ausgewählt aus Silyl, Hydrocarbyl, Hydrocarbyloxy und Kombinationen daraus, wobei R' bis zu 30 Kohlenstoff- oder Siliciumatome hat.

**16.** Ein Derivat eines silanfunktionalisierten Interpolymers, erhältlich durch ein Verfahren, wie es in einem der vorhergenden Ansprüche beansprucht ist.

## Revendications

**1.** Procédé pour la préparation d'un dérivé d'un interpolymère fonctionnalisé par des groupes silane comprenant :

(i) la préparation d'un interpolymère en mettant en contact dans des conditions de polymérisation par addition un ou plusieurs monomères polymérisables par addition dépourvus de fonctionnalité silane et un ou plusieurs composés alcénylsilane répondant à la formule :

$$A_nJ_jSiH_{4-(n+j)}$$

dans laquelle :

J représente un groupe hydrocarbyle en $C_1$-$C_{40}$,
A représente un groupe alcényle en $C_2$-$C_{20}$,
n vaut 1 ou 2, et
j vaut 0, 1 ou 2 ;

avec une composition de catalyseur comprenant un complexe de métal de transition répondant à la formule :

$$K'_kMZ'_mL_lX_p,$$

ou un dimère de celui-ci
où :

K' représente un groupe anionique contenant des électrons π délocalisés par lesquels K' est lié à M, ledit groupe K' contenant jusqu'à 50 atomes sans compter les atomes d'hydrogène, facultativement, deux groupes K' sont joints ensemble en formant une structure pontée, et facultativement encore, un groupe K' est lié à Z' ;
M représente un métal du Groupe 4 du Tableau Périodique des Eléments ayant un état d'oxydation formel de +2, +3 ou +4 ;
Z' représente un substituant facultatif divalent contenant jusqu'à 50 atomes qui ne sont pas des atomes d'hydrogène, lequel, conjointement avec le groupe K', forme un métallocycle avec M ;
L représente un ligand neutre facultatif ayant jusqu'à 20 atomes qui ne sont pas des atomes d'hydrogène ;
chaque X représente un fragment anionique monovalent ayant jusqu'à 40 atomes qui ne sont pas des atomes d'hydrogène, facultativement, deux groupes X peuvent être liés ensemble de manière covalente formant un fragment dianionique divalent ayant les deux valences liées à M, ou, facultativement, deux groupes X peuvent être liés ensemble de manière covalente afin de former un diène neutre, conjugué ou non conjugué qui est lié à M au moyen d'électrons π délocalisés (moyennant quoi M a un état d'oxydation de +2), ou facultativement encore, un ou plusieurs X et un ou plusieurs groupes L peuvent être liés ensemble formant de ce fait un fragment qui est à la fois lié à M de manière covalente et coordonné à celui-ci au moyen d'une fonctionnalité de base de Lewis ;
k vaut 1 ou 2 ; m vaut 0 ou 1 ; 1 est un nombre de 0 à 3 ; p est un nombre entier de 0 à 3 ; et
la somme, k + m + p, est égale à l'état d'oxydation formel de M, sauf lorsque les deux groupes X forment conjointement un diène neutre, conjugué ou non conjugué qui est lié à M par l'intermédiaire d'électrons π délocalisé, dans ce cas, la somme k + m est égale à l'état d'oxydation formel de M, ledit interpolymère comprenant de 0,01 à 100 ramifications à longue chaîne pour 10 000 atomes de carbone, ayant des fonctionnalités silane distribuées de manière aléatoire et contenant de 0,01 à 1 000 groupes silane dérivés du composé alcénylsilane pour 10 000 atomes de carbones et

(ii) soumettre ultérieurement l'interpolymère à un procédé de conversion des groupes silanes choisi parmi :

a) un couplage d'une ou de plusieurs chaînes de tels interpolymères,
b) une hydrolyse pour donner des groupes Si-$OR^4$, dans lesquels $R^4$ représente H ou un groupe hydrocarbyle en $C_1$-$C_{10}$ ;
c) une hydrolyse et neutralisation pour donner des ionomères ayant des groupes Si-$OR^6$, dans lesquels $R^6$ représente un cation métallique ; ou
d) une condensation ou toute autre réaction avec un substrat inorganique ayant des groupes hydroxyle en surface ou avec un composé de liaison polyfonctionnel contenant deux ou plusieurs groupes alcool, amine, époxy, peroxyde, carboxyle, isocyanate, nitrile, amide, cétone, ester, ou diazonium ou des dérivés de type sel métallique de groupes carboxy.

**2.** Procédé selon la revendication 1, dans lequel la fonctionnalité silane distribuée de manière aléatoire est distribuée de manière égalitaire parmi les différentes chaînes de polymère.

**3.** Procédé selon la revendication 1 ou la revendication 2, dans lequel la distribution aléatoire de la fonctionnalité silane satisfait les conditions requises suivantes : $0,1 < r_{12*}r_{21} < 10,0$, où :

$$r_{12} = k_{11}/k_{12},$$

$$r_{21} = k_{22}/k_{21},$$

et
$k_{ij}$ représente la constante de vitesse pour le monomère i incorporé le plus récemment, avec le monomère entrant i ou j durant la catalyse.

**4.** Procédé selon la revendication 3, dans lequel la distribution aléatoire de la fonctionnalité silane satisfait aux conditions requises suivantes : $0,5 < r_{12}*r_{21} < 2$.

**5.** Procédé selon la revendication 4, dans lequel la distribution aléatoire de la fonctionnalité silane satisfait aux conditions requises suivantes : $0,75 < r_{12}*r_{21} < 1,5$.

**6.** Procédé selon l'une quelconque des revendications précédentes, dans lequel le ou les composé(s) alcénylsilane répondent à la formule :

$AJ_2SiH$

dans laquelle :

J représente un groupe hydrocarbyle en $C_1$-$C_{40}$, et
A représente un groupe alcényle en $C_2$-$C_{20}$.

**7.** Procédé selon l'une quelconque des revendications précédentes, dans lequel l'alcénylsilane est choisi parmi l'hexénylsilane, l'allylsilane, le vinylsilane, l'octénylsilane, l'hexényldiméthylsilane, l'octényldiméthylsilane, le vinyldiméthylsilane, le vinyldiéthylsilane, le vinyldi(n-butyl)silane, le vinylméthyloctadécylsilane, le vinyldiphénylsilane, le vinyldibenzylsilane, l'allyldiméthylsilane, l'allyldiéthylsilane, l'allyldi(n-butyl)silane, l'allylméthyloctadécylsilane, l'allyldiphénylsilane, le bishexénylsilane, et l'allyldibenzylsilane et leurs mélanges.

**8.** Procédé selon l'une quelconque des revendications précédentes, dans lequel le monomère polymérisable par addition est une oléfine ou un mélange d'oléfines et de dioléfines.

**9.** Procédé selon la revendication 8, dans lequel le monomère polymérisable par addition est une $\alpha$-oléfine en $C_2$-$C_{20}$ ou un mélange de celles-ci.

**10.** Procédé selon la revendication 9, dans lequel le monomère polymérisable par addition est choisi parmi l'éthylène, le propylène, et des mélanges de l'éthylène avec le propylène, le 1-butène, le 1-hexène ou le 1-octène.

**11.** Procédé selon l'une quelconque des revendications précédentes, dans lequel l'interpolymère contient de 0,05 à 50 groupes silane dérivés du composé alcénylsilane pour 10 000 atomes de carbone.

**12.** Procédé selon l'une quelconque des revendications précédentes, dans lequel un additif contenant des groupes hydroxyle, un composé hydraté ou un composé contenant de l'eau retenue de manière physique est mis à réagir avec l'interpolymère fonctionnalisé par des groupes silane.

**13.** Procédé selon l'une quelconque des revendications précédentes, dans lequel le complexe de métal de transition possède deux groupes K liés au moyen d'un groupe ponté répondant à la formule :

$$(ER'_2)_x$$

dans laquelle :

E représente du silicium, du germanium, de l'étain, ou du carbone,
chaque R' représente indépendamment de l'hydrogène ou un groupe choisi parmi un groupe silyle, hydrocarbyle, hydrocarbyloxy et leurs combinaisons, ledit R' ayant jusqu'à 30 atomes de carbone ou de silicium, et
x vaut de 1 à 8.

**14.** Procédé selon la revendication 13, dans lequel le complexe de métal de transition répond à la formule :

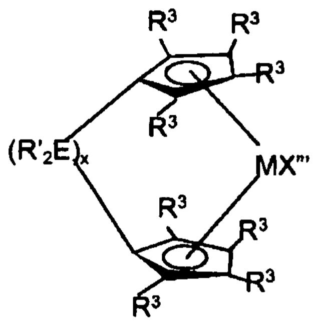

(IV)

dans laquelle :

M représente du titane, du zirconium ou de l'hafnium avec un état d'oxydation formel de +2 ;
chaque $R^3$ est indépendamment choisi parmi des groupes hydrocarbyle, silyle, germyle, halogéno, halogénohydrocarbyle, hydrocarbyloxy, hydrocarbylsiloxy, N,N-di(hydrocarbylsilyl)amino, N-hydrocarbyl-N-silylamino, N,N-di(hydrocarbyl)amino, hydrocarbylèneamino, di(hydrocarbyl)phosphino, hydrocarbylsulfido ; ou hydrocarbyle à substitution hydrocarbyloxy, ledit $R^3$ ayant jusqu'à 20 atomes qui ne sont pas des atomes d'hydrogène, ou les groupes $R^3$ adjacents forment conjointement un dérivé divalent formant de ce fait un système de cycles condensés ;
chaque X''' représente indépendamment un diène neutre, conjugué, ou un dérivé de celui-ci substitué par un groupe silyle, germyle, ou halogénohydrocarbyle, ayant jusqu'à 40 atomes qui ne sont pas des atomes d'hydrogène ;
E représente du silicium ou du carbone ;
chaque R' représente indépendamment de l'hydrogène ou un groupe choisi parmi des groupes silyle, hydrocarbyle, hydrocarbyloxy et leurs combinaisons, ledit R' ayant jusqu'à 30 atomes de carbone ou de silicium, et
x vaut de 1 à 8.

**15.** Procédé selon l'une quelconque des revendications 1 à 12, dans lequel le complexe de métal de transition répond à la formule :

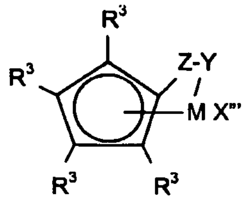

dans laquelle :

M représente du titane ou du zirconium avec un état d'oxydation formel de +2 ;
chaque $R^3$ est indépendamment choisi parmi des groupes hydrocarbyle, silyle, germyle, halogéno, halogénohydrocarbyle, hydrocarbyloxy, hydrocarbylsiloxy, N,N-di(hydrocarbylsilyl)amino, N-hydrocarbyl-N-silylamino, N,N-di(hydrocarbyl)amino, hydrocarbylèneamino, di(hydrocarbyl)phosphino, hydrocarbylsulfido ; ou hydrocarbyle à substitution hydrocarbyloxy, ledit $R^3$ ayant jusqu'à 20 atomes qui ne sont pas des atomes d'hydrogène, ou les groupes $R^3$ adjacents forment conjointement un dérivé divalent formant de ce fait un système de cycles condensés ;
chaque X représente un groupe halogéno, hydrocarbyle, hydrocarbyloxy ou silyle, ledit groupe ayant jusqu'à 20 atomes qui ne sont pas des atomes d'hydrogène, ou deux groupes X forment conjointement un dérivé divalent de celui ;
X''' représente un diène neutre, conjugué, ou un dérivé de celui-ci substitué par un groupe silyle, germyle, ou halogénohydrocarbyle, ayant jusqu'à 40 atomes qui ne sont pas des atomes d'hydrogène ;
Y représente -O-, -S-, -NR'-, ou -PR'- ; et
Z représente $SiR'_2$, $CR'_2$, $SiR'_2SiR'_2$, $CR'_2CR'_2$, $CR'=CR'$, $CR'_2SiR'_2$, ou $GeR'_2$, où chaque R' représente indépendamment de l'hydrogène ou un groupe choisi parmi des groupes silyle, hydrocarbyle, hydrocarbyloxy et leurs combinaisons, ledit R' ayant jusqu'à 30 atomes de carbone ou de silicium.

**16.** Dérivé d'un interpolymère fonctionnalisé par des groupes silane que l'on peut obtenir au moyen d'un procédé défini selon l'une quelconque des revendications précédentes.